# EUROPEAN PATENT SPECIFICATION

(11) **EP 4 145 938 B1**
(45) Date of publication and mention of the grant of the patent: **27.08.2025**
(21) Application number: 21803529.3
(22) Date of filing: 11.05.2021
(51) Int. Cl.: H04W 76/15, H04W 72/0446, H04W 72/1263, H04W 84/12

(54) **MULTI-LINK COMMUNICATION METHODS AND RELATED APPARATUSES**
MULTILINK-KOMMUNIKATIONSVERFAHREN UND ZUGEHÖRIGE VORRICHTUNGEN
PROCÉDÉS DE COMMUNICATION À LIAISONS MULTIPLES ET APPAREILS ASSOCIÉS

(30) Priority: 14.05.2020 CN 202010409577
(43) Date of publication of application: 08.03.2023
(73) Proprietor: Huawei Technologies Co., Ltd., Shenzhen, Guangdong 518129 (CN)
(72) Inventor: LI, Yunbo, Shenzhen, Guangdong 518129 (CN); GUO, Yuchen, Shenzhen, Guangdong 518129 (CN); GAN, Ming, Shenzhen, Guangdong 518129 (CN); LI, Yiqing, Shenzhen, Guangdong 518129 (CN)
(74) Representative: Pfenning, Meinig & Partner mbB
(86) International application number: PCT/CN2021/093038
(87) International publication number: WO 2021/228085

(56) References cited:
- WO-A1-2020/050541
- WO-A1-2020/060145
- WO-A1-2020/060145
- CN-A- 109 587 052
- US-A1- 2019 306 920
- US-A1- 2020 053 773
- US-A1- 2022 053 559

## Description

This application claims priority to Chinese Patent Application No. 202010409577.3, filed with the China National Intellectual Property Administration on May 14, 2020 and entitled "MULTI-LINK COMMUNICATION METHOD AND RELATED APPARATUS".

### TECHNICAL FIELD

This application relates to the field of wireless communication technologies, and in particular, to multi-link communication methods and related apparatuses.

### BACKGROUND

A continuous technical goal of development and evolution of a wireless local area network (wireless local area network, WLAN) or a cellular network is to continuously improve a throughput. WLAN system protocols are mainly discussed by the institute of electrical and electronics engineers (IEEE, Institute of Electrical and Electronics Engineers) standard group. In the standards such as IEEE 802.11a/b/g/n/ac/ax, the throughput is continuously improved. The next-generation Wi-Fi standard, IEEE 802.11be, is referred to as extremely high throughput (extremely high throughput, EHT) or Wi-Fi 7, and its most important technical goal is to significantly improve a peak throughput.

Therefore, in IEEE 802.11be, the peak throughput is improved by using a multi-link (multi-link, ML), to achieve the technical goal of the extremely high throughput. A core idea of the multi-link is that a WLAN device that supports the next-generation IEEE 802.11 standard has a multi-band (multi-band) transmit and receive capability, so that a larger bandwidth is used for data transmission, thereby significantly improving the throughput. The multi-band includes but is not limited to a 2.4 GHz Wi-Fi band, a 5 GHz Wi-Fi band, and a 6 GHz Wi-Fi band. A band in which a communication device performs access and transmission may be referred to as one link, and a plurality of bands in which a communication device performs access and transmission may be referred to as a multi-link. A next-generation IEEE 802.11 standard-compliant station device that simultaneously supports a plurality of links is referred to as a multi-link device (multi-link device, MLD). It is clearly that the multi-link device may greatly increase a transmission rate through multi-link parallel communication.

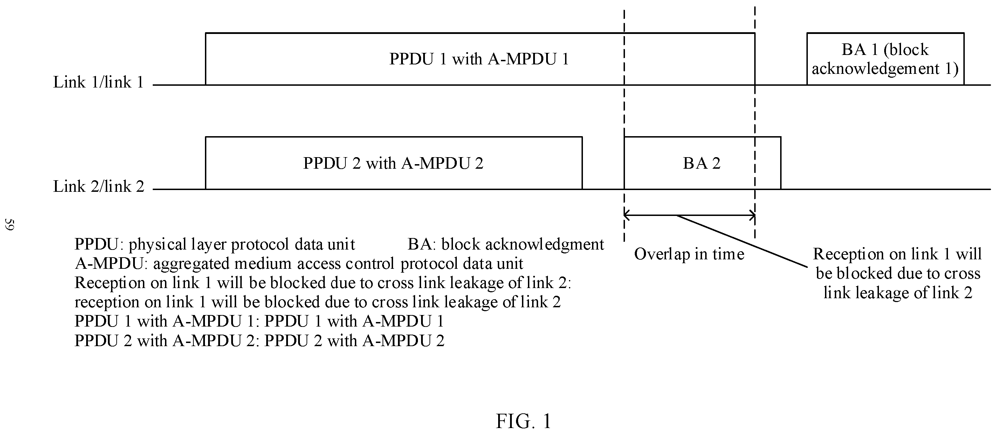

However, some multi-link devices may not support simultaneous transmit and receive (simultaneous transmit and receive, STR) on the plurality of links under some circumstances. Therefore, when a frequency spacing between a plurality of bands supported by a non-STR (non-simultaneous transmit and receive) multi-link device (which refers to a multi-link device that does not support STR herein) is short, sending a signal in one band interferes with receiving a signal in another band. This is because when the device sends the signal, signal energy is large. When the device receives the signal, because the signal arrives at a receive end after channel attenuation, signal energy is small when the receive end receives the signal. Therefore, energy leaked from the signal in the one band to the another band during sending interferes with reception of the signal in the another band. FIG. 1 is a schematic diagram of mutual interference in a non-STR multi-link device in a plurality of bands. As shown in FIG. 1, the non-STR multi-link device sends block acknowledgement (block acknowledgement) BA 1 after receiving a physical layer protocol data unit (physical layer protocol data unit) PPDU 1 on a link 1 (link 1), and sends BA 2 after receiving a PPDU 2 on a link 2 (link 2). A length of the PPDU 1 is greater than a length of the PPDU 2. Therefore, when sending of the PPDU 1 is not completed, the non-STR multi-link device has completely received the PPDU 2 and sent the BA 2 on the link 2. Therefore, the BA 2 and the PPDU 1 may overlap in time. In this case, sending the BA 2 on the link 2 by the multi-link device interferes with reception of the PPDU 1 on the link 1 by the multi-link device. Therefore, how the non-STR multi-link device simultaneously accesses a plurality of links for data transmission, to reduce mutual interference between the plurality of links and increase a transmission rate becomes an urgent problem to be resolved.

### SUMMARY

Embodiments of this application provide a multi-link communication method and a related apparatus, to support a non-simultaneous transmit and receive multi-link device to concurrently perform data transmission in a same transmission direction on a plurality of links, thereby reducing mutual interference between the plurality of links. For example, when a frequency spacing between a plurality of bands is short, interference between the plurality of links can be reduced, to improve communication efficiency.

According to a first aspect, an embodiment of this application provides a multi-link communication method, applied to a first multi-link device. A first station of the first multi-link device operates on a first link in a plurality of links, and a second station of the first multi-link device operates on a second link in the plurality of links. The multi-link communication method includes: The first station of the first multi-link device generates a request to trigger frame and sends the request to trigger frame to a first access point of a second multi-link device on the first link, where the request to trigger frame indicates that a transmission opportunity (transmission opportunity) TXOP obtained by the first station through contention is transferred from the first station to the first access point. The first station receives a

first trigger frame from the first access point on the first link. The first trigger frame is generated based on the end time indication information of the TXOP, the AC indication information, or the NSS indication information included in the request to trigger frame. The second station receives a second trigger frame from a second access point of the second multi-link device on the second link. By receiving, by the first station of the first multi-link device, the first trigger frame on the first link, and receiving, by the second station of the first multi-link device, the second trigger frame on the second link, the first multi-link device is scheduled, by the second multi-link device, to simultaneously (concurrently) send uplink data on the two links. It may be understood that the first access point of the second multi-link device operates on the first link, and the second access point operates on the second link.

Optionally, the request to trigger frame may be further used to request the second multi-link device to schedule the first station within the TXOP to perform uplink data transmission.

The request to trigger frame includes one or more of end time indication information of the transmission opportunity TXOP, access category (access category) AC indication information, and number of spatial streams (number of spatial streams) NSS indication information. The end time indication information of the TXOP, the AC indication information, or the NSS indication information included in the request to trigger frame is used by the second multi-link device to generate the first trigger frame. An end moment of the first trigger frame on the first link is the same as an end moment of the second trigger frame on the second link, so that the first multi-link device can simultaneously (concurrently) send the uplink data on the two links. For example, the first station sends an uplink PPDU after a short inter-frame space (short inter-frame space) SIFS from the end moment of the first trigger frame, and the second station sends an uplink PPDU after an SIFS from the end moment of the second trigger frame, to enable the uplink PPDUs on the two links to be aligned in time, thereby avoiding sending on one link and receiving on the other link.

It may be understood that in this solution, the TXOP obtained by the first station of the first multi-link device through contention is transferred to the first access point of the second multi-link device by using the request to trigger frame, so that the second multi-link device simultaneously schedules, on the plurality of links by using trigger frames, the first multi-link device to simultaneously send uplink data on the plurality of links. In this way, the first multi-link device aligns a plurality of PPDUs on the plurality of links, to reduce mutual interference between the plurality of links. For example, when a frequency spacing between a plurality of bands is short, interference between the plurality of links can be reduced, to improve communication efficiency.

Optionally, sending end moments of the uplink data sent by the first multi-link device on the two links may also be the same/aligned. In this technical solution, sending start moments and sending end moments of the uplink data sent on the plurality of links are aligned. This helps the second multi-link device schedule, on the plurality of links, transmission of a next uplink PPDU on the plurality of links.

With reference to the first aspect, in a possible design, after the first multi-link device sends the request to trigger frame, the method further includes: The first station of the first multi-link device receives a request to trigger response frame from the first access point of the second multi-link device, where the request to trigger response frame indicates the first access point to confirm that the TXOP of the first station is transferred from the first station to the first access point. Optionally, the request to trigger response frame may be further used to agree to a request of the first multi-link device, in other words, agree to schedule the first station within the TXOP to perform uplink data transmission.

Optionally, the request to trigger response frame may indicate, by using a reverse direction grant (reverse direction grant, RDG) PPDU subfield or a more PPDU subfield, the first access point to confirm that the TXOP of the first station is transferred from the first station to the first access point or agree to schedule the first station within the TXOP to perform uplink data transmission.

The request to trigger frame may be a trigger (trigger) frame. When a value of an RDG PPDU subfield or a more PPDU subfield in the trigger frame is 1, the request to trigger frame indicates the first access point to confirm that the TXOP of the first station is transferred from the first station to the first access point or agree to schedule the first station within the TXOP to perform uplink data transmission. Optionally, the request to trigger frame may alternatively be an acknowledgment ACK frame, a clear to send frame, or the like.

In this solution, the RDG/more PPDU subfield is added to the request to trigger response frame to respond to an indication or a request of the request to trigger frame, so that an interaction procedure in this solution can be improved, and an RDG mechanism can be reused.

With reference to the first aspect, in a possible design, after the first station of the first multi-link device sends the request to trigger frame, the method further includes: The first station of the first multi-link device receives an aggregated QoS null frame from the first access point of the second multi-link device, where the aggregated QoS null frame indicates the first access point to confirm that the TXOP of the first station is transferred from the first station to the first access point. Optionally, the request to trigger response frame may be further used to agree to the request of the first multi-link device, in other words, agree to schedule the first station within the TXOP to perform uplink data transmission.

A value of an RDG PPDU/more PPDU subfield in the aggregated QoS null frame may be 1.

It may be understood that, in a conventional RDG mechanism, a manner in which a reverse direction responder declines an RDG includes: sending a control response frame that does not carry a high throughput control field, and the request to trigger response frame in this solution may be a trigger frame or an acknowledgment frame. In addition, each of the trigger frame and the acknowledgment frame does not carry a high throughput control field. Therefore, the request to trigger response frame in this solution may be mistakenly considered as declining an RDG when the RDG mechanism is reused. Consequently, uplink data transmission cannot be scheduled on the plurality of links. Therefore, in this solution, after the first station sends the request to trigger frame, the first station is notified, by using the aggregated QoS null frame, that the first access point confirms that the TXOP of the first station is transferred from the first station to the first access point or agrees to schedule the first station within the TXOP to perform uplink data transmission, to better reuse the RDG mechanism. This helps prevent the request to trigger response frame from being mistakenly considered as being used to decline the RDG, and helps schedule uplink data transmission on the plurality of links.

With reference to the first aspect, in a possible design, after the first multi-link device simultaneously sends the uplink data on the two links, the method further includes: The first station of the first multi-link device sends return information to the first access point of the second multi-link device, where the return information indicates that the TXOP is transferred from the first access point back to the first station. Optionally, the return information is used to return the TXOP transferred by the first station to the first access point for use, in other words, the TXOP is returned by the first access point to the first station, or the first station restores an identity of a TXOP holder.

Optionally, the return information may be carried in an A-control field of a high efficiency HE variant high throughput HT control field. Alternatively, an A-control field of a high efficiency HE variant high throughput HT control field may indicate that the TXOP is transferred from the first access point back to the first station.

With reference to the first aspect, in a possible design, after the first multi-link device simultaneously sends the uplink data on the two links, the method further includes: The first station of the first multi-link device receives return information from the first access point of the second multi-link device, where the return information indicates that the TXOP is transferred from the first access point back to the first station. Optionally, the return information is used to return the TXOP transferred by the first station to the first access point for use, in other words, the TXOP is returned by the first access point to the first station, or the first station restores an identity of a TXOP holder.

Optionally, the return information may be carried in any one of the following fields: the RDG PPDU subfield, the more PPDU subfield, and a type field of a frame control field or a subtype field of a frame control field.

In this solution, the first station sends the return information to actively request the first access point to return the TXOP, in other words, the first station actively ends uplink data scheduling on the plurality of links. Alternatively, the first access point sends the return information to actively return the TXOP, in other words, the first access point actively ends uplink data scheduling on the plurality of links. A procedure of the multi-link communication method in this solution can be further improved, and permission of the first station that obtains the TXOP through contention can be further ensured.

According to a second aspect, an embodiment of this application provides a multi-link communication method, applied to a second multi-link device. A first access point of the second multi-link device operates on a first link in a plurality of links, and a second access point of the second multi-link device operates on a second link in the plurality of links. The multi-link communication method includes: The first access point of the second multi-link device receives a request to trigger frame from a first station of a first multi-link device, where the request to trigger frame indicates that a TXOP obtained by the first station through contention is transferred from the first station to the first access point. After receiving the request to trigger frame, the second multi-link device generates a first trigger frame based on end time indication information of the TXOP, AC indication information, or NSS indication information included in the request to trigger frame, and schedules the first multi-link device to simultaneously send uplink data on the two links by sending the first trigger frame to the first station on the first link and sending a second trigger frame to a second station on the second link. It may be understood that the first station of the first multi-link device operates on the first link, and the second station operates on the second link.

Optionally, the request to trigger frame may be further used to request the second multi-link device to schedule the first station within the TXOP to perform uplink data transmission.

An end moment of the first trigger frame on the first link is the same as an end moment of the second trigger frame on the second link, so that the first multi-link device can simultaneously (concurrently) send the uplink data on the two links. For example, the first station sends an uplink PPDU after an SIFS from the end moment of the first trigger frame, and the second station sends an uplink PPDU after an SIFS from the end moment of the second trigger frame, to enable the uplink PPDUs on the two links to be aligned in time, thereby avoiding sending on one link and receiving on the other link.

Optionally, sending end moments of the uplink data sent by the first multi-link device on the two links may also be the same/aligned. In this technical solution, sending start moments and sending end moments of uplink data sent on the plurality of links are aligned. This helps the second multi-link device schedule, on the plurality of links, transmission of a next uplink PPDU on the plurality of links.

With reference to the second aspect, in a possible design, after the second multi-link device receives the request to trigger frame, the method further includes: The first access point of the second multi-link device sends a request to trigger response frame to the first station of the first multi-link device, where the request to trigger response frame indicates the first access point to confirm that the TXOP of the first station is transferred from the first station to the first access point. Optionally, the request to trigger response frame may be further used to agree to a request of the first multi-link device, in other words, agree to schedule the first station within the TXOP to perform uplink data transmission.

Optionally, the request to trigger response frame may indicate, by using an RDG PPDU subfield or a more PPDU subfield, the first access point to confirm that the TXOP of the first station is transferred from the first station to the first access point or agree to schedule the first station within the TXOP to perform uplink data transmission.

The request to trigger frame may be a trigger (trigger) frame. When a value of an RDG PPDU subfield or a more PPDU subfield in the trigger frame is 1, the request to trigger frame indicates the first access point to confirm that the TXOP of the first station is transferred from the first station to the first access point or agree to schedule the first station within the TXOP to perform uplink data transmission. Optionally, the request to trigger frame may alternatively be an acknowledgment frame, a clear to send frame, or the like.

With reference to the second aspect, in a possible design, after the second multi-link device receives the request to trigger frame, the method further includes: The first access point of the second multi-link device sends an aggregated QoS null frame to the first station of the first multi-link device, where the aggregated QoS null frame indicates the first access point to confirm that the TXOP of the first station is transferred from the first station to the first access point. Optionally, the request to trigger response frame may be further used to agree to the request of the first multi-link device, in other words, agree to schedule the first station within the TXOP to perform uplink data transmission.

A value of an RDG PPDU/more PPDU subfield in the aggregated QoS null frame may be 1.

With reference to the second aspect, in a possible design, after the second multi-link device receives the uplink data on the two links, the method further includes: The first access point of the second multi-link device receives return information from the first station of the first multi-link device, where the return information indicates that the TXOP is transferred from the first access point back to the first station. Optionally, the return information is used to return the TXOP transferred by the first station to the first access point for use, in other words, the TXOP is returned by the first access point to the first station, or the first station restores an identity of a TXOP holder.

Optionally, the return information may be carried in an A-control field of a high efficiency HE variant high throughput HT control field. Alternatively, an A-control field of a high efficiency HE variant high throughput HT control field may indicate that the TXOP is transferred from the first access point back to the first station.

With reference to the second aspect, in a possible design, after the second multi-link device receives the uplink data on the two links, the method further includes: The first access point of the second multi-link device sends return information to the first station of the first multi-link device, where the return information indicates that the TXOP is transferred from the first access point back to the first station. Optionally, the return information is used to return the TXOP transferred by the first station to the first access point for use, in other words, the TXOP is returned by the first access point to the first station, or the first station restores an identity of a TXOP holder.

Optionally, the return information may be carried in any one of the following fields: the RDG PPDU subfield, the more PPDU subfield, and a type field of a frame control field or a subtype field of a frame control field.

According to other aspects, communication apparatuses applied to multi-link communication are defined by appended independent claims 13-15.

In embodiments of this application, the non-simultaneous transmit and receive multi-link device can concurrently perform data transmission in the same transmission direction on the plurality of links, thereby reducing mutual interference between the plurality of links. For example, when the frequency spacing between the plurality of bands is short, interference between the plurality of links can be reduced, to improve communication efficiency.

### BRIEF DESCRIPTION OF DRAWINGS

FIG. 1 is a schematic diagram of mutual interference in a non-STR multi-link device in a plurality of bands;
FIG. 2a is a schematic diagram of an NAV setting according to an embodiment of this application;
FIG. 2b is another schematic diagram of an NAV setting according to an embodiment of this application;
FIG. 3 is a schematic diagram of an architecture of a wireless communication system according to an embodiment of this application;
FIG. 4a is a schematic diagram of a structure of a multi-link device according to an embodiment of this application;
FIG. 4b is a schematic diagram of another structure of a multi-link device according to an embodiment of this application;
FIG. 5 is a schematic diagram of communication between an AP multi-link device and a STA multi-link device according to an embodiment of this application;
FIG. 6 is a schematic flowchart of a multi-link communication method according to an embodiment of this application;
FIG. 7 is a schematic diagram of a time sequence of a multi-link communication method according to an embodiment of this application;
FIG. 8 is a schematic diagram of another time sequence of a multi-link communication method according to an embodiment of this application;
FIG. 9 is a schematic diagram of still another time sequence of a multi-link communication method according to an embodiment of this application;
FIG. 10 is another schematic flowchart of a multi-link communication method according to an embodiment of this application;
FIG. 11 is a schematic diagram of an end moment and remaining duration of a TXOP according to an embodiment of this application;
FIG. 12a is a schematic diagram of an HT variant HT control field;
FIG. 12b is a schematic diagram of a VHT variant HT control field;
FIG. 12c is a schematic diagram of an A-control subfield in an HE variant HT control field;
FIG. 13 is a schematic diagram of a trigger frame according to an embodiment of this application;
FIG. 14 is a schematic diagram of a structure of a communication apparatus according to an embodiment of this application; and
FIG. 15 is a schematic diagram of another structure of a communication apparatus according to an embodiment of this application.

### DESCRIPTION OF EMBODIMENTS

The following clearly and completely describes technical solutions in embodiments of this application with reference to accompanying drawings in embodiments of this application.

To facilitate understanding of the technical solutions in embodiments of this application, the following briefly describes meanings of some nouns (or terms) in embodiments of this application.

### 1. Transmission opportunity (transmission opportunity, TXOP)

TXOP duration is a period of time in which a station (the station herein may be an access point or a non-access point station) performs data transmission without interference after obtaining a transmission opportunity. A station that obtains the TXOP may be referred to as a TXOP holder (TXOP holder). The TXOP duration includes duration required by the TXOP holder to transmit one or more pieces of data and a corresponding immediate response frame (the immediate response frame herein may be an acknowledgment frame, block acknowledgement, or the like). Limited by the national and regional laws and regulations, the TXOP duration cannot exceed an upper limit, and this upper limit is referred to as TXOP limit (extreme duration of the TXOP). A value of the TXOP limit is limited by the national and regional laws and regulations.

Optionally, an AP may broadcast the value of the TXOP limit by using a beacon (beacon) frame or a probe response (probe response) frame.

Optionally, the TXOP limit is further related to an access category (access category, AC, or referred to as an access type) of the transmission opportunity obtained through contention. Specifically, as shown in the following Table 1, Table 1 shows values of TXOP limits corresponding to four different access categories. AC_VO indicates that an access category (or an access type) is a voice (voice) stream, AC_VI indicates that an access category is a video (video) stream, AC_BE indicates that an access category is a best effort (best effort) stream, and AC_BK indicates that an access category is a background (background) stream.

**Table 1: Descriptions about TXOP limit corresponding to different access categories**

| AC | AC_BK | AC_BE | AC_VI | AC_VO |
|---|---|---|---|---|
| TXOP limit | 2.528 ms | 2.528 ms | 4.096 ms | 2.080 ms |

Optionally, a priority of the voice stream > a priority of the video stream > a priority of the best effort stream > a priority of the background stream. In other words, a descending order of priorities is: AC-VO, AC-VI, AC-BE, and AC-BK. It may be understood that a higher priority indicates a higher channel preemption capability.

It may be understood that "data transmission" and "transmission data" in embodiments of this application generally refer to communication. "Data" generally refers to communication information, is not limited to data information, and may further be signaling information or the like.

### 2. Network allocation vector (network allocation vector, NAV)

Virtual carrier sense (virtual carrier sense) is a type of carrier sense, and means obtaining a channel condition by using control information instead of actually detecting a physical channel. Specifically, the virtual carrier sense implements logical prediction based on related information carried in a medium access control (medium access control, MAC) frame. In other words, each frame carries duration (duration) information of a next frame of a sending station, and each station predicts channel occupation based on the duration information. If a station does not sense the duration information, for example, when a carrier is sensed, a duration field of this frame has been transmitted, the station can only rely on physical layer detection.

The virtual carrier sense may be implemented by using the network allocation vector NAV. The NAV is essentially a countdown timer, and gradually decreases with the passing of time. When a countdown is 0, a medium is considered to be idle. Therefore, a timing value of the NAV is set and updated by using a virtual carrier sense technology with an appropriate value at an appropriate time. Specifically, after a station receives a frame, if a receiver address of the frame is not the station, the station may update an NAV based on a duration (duration) field in the received frame. If the receiver address of the frame is the station, it indicates that the station is a receiving station, and the NAV cannot be updated.

Optionally, before the NAV is updated, it may be further determined whether a value of the duration field in the current frame is greater than a current NAV value of the station. If the value is greater than the current NAV value of the station, the NAV is updated. On the contrary, if the value is less than or equal to the current NAV value, the NAV is not updated. The NAV value starts from an end moment of the received frame.

It may be understood that the duration field may be used to notify another non-receiving station of duration for which a channel is occupied, to prevent the another non-receiving station from accessing the channel and transmitting data.

Optionally, after obtaining a TXOP, a sending station may set a value of a duration field, so that TXOP duration does not exceed the TXOP limit.

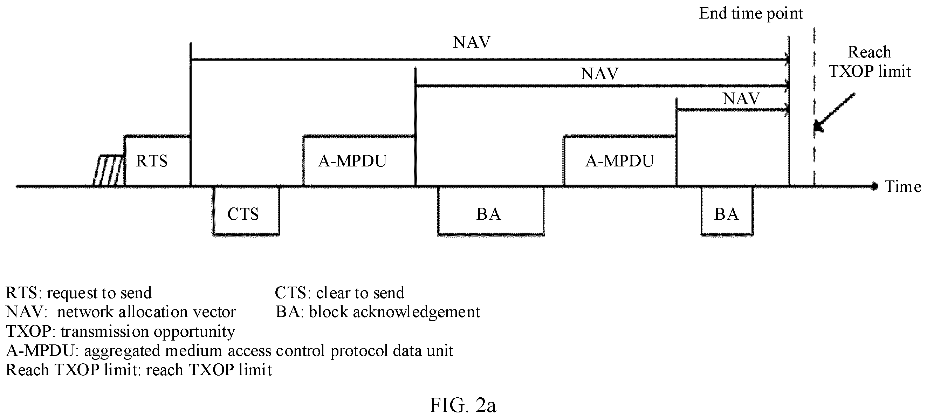

FIG. 2a is a schematic diagram of an NAV setting according to an embodiment of this application. As shown in FIG. 2a, after obtaining a TXOP, a sending station sets a value of a duration field in a first transmit frame (for example, a request to send (request to send, RTS) frame in FIG. 2a), so that TXOP duration does not exceed the TXOP limit. Then, a value of a duration field is set in a subsequent frame, so that an end time point corresponding to the duration field in the subsequent frame is the same as an end time point corresponding to a duration field in a previous frame. It may be understood that a non-receiving station updates an NAV based on each received frame. It may be understood that, in FIG. 2a, the value of the duration field carried in the RTS frame may be the same as the TXOP duration.

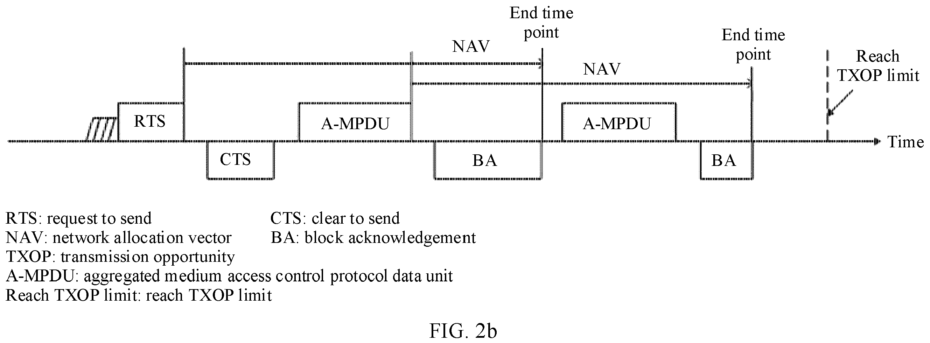

FIG. 2b is another schematic diagram of an NAV setting according to an embodiment of this application. As shown in FIG. 2b, after obtaining a TXOP, if a value of a duration field set in a first transmit frame (for example, an RTS frame in FIG. 2b) is less than the TXOP limit, or TXOP duration set for the first time is less than the TXOP limit, a sending station may set a value of a duration field in a subsequent frame, so that current TXOP duration exceeds an end time point of previous TXOP duration, but starts from the TXOP duration set for the first time, and total TXOP duration cannot exceed the TXOP limit. It may be understood that a non-receiving station updates an NAV based on each received frame.

The foregoing description briefly describes the meanings of some nouns (or terms) in embodiments of this application. To better understand a multi-link communication method provided in embodiments of this application, the following describes a system architecture and/or an application scenario of the multi-link communication method provided in embodiments of this application. It may be understood that scenarios described in embodiments of this application are intended to describe the technical solutions in embodiments of this application more clearly, and do not constitute a limitation on the technical solutions provided in embodiments of this application.

Embodiments of this application provide a multi-link communication method applied to a wireless communication system, to simultaneously access a plurality of links for data transmission, so as to reduce mutual interference between the plurality of links and increase a transmission rate. The wireless communication system may be a wireless local area network or a cellular network. The multi-link communication method may be implemented by a communication device in the wireless communication system or a chip or a processor in the communication device. The communication device may be a wireless communication device that supports multi-link concurrent transmission. For example, the communication device may be referred to as a multi-link device or a multi-band device (multi-band device). Compared with a communication device that supports only single-link transmission, the multi-link device has higher transmission efficiency and a higher throughput.

The multi-link device includes one or more affiliated stations (affiliated STA). The affiliated stations are a logical station and may operate on one link. The affiliated station may be an access point (access point, AP) or a non-access point station (non-access point station, non-AP STA). For ease of description, in this application, a multi-link device whose affiliated station is an AP may be referred to as a multi-link AP, a multi-link AP device, or an AP multi-link device (AP multi-link device, AP MLD). A multi-link device whose affiliated station is a non-AP STA may be referred to as a multi-link STA, a multi-link STA device, or a STA multi-link device (STA multi-link device, STA MLD). For ease of description, "the multi-link device includes an affiliated station" is also briefly described as "the multi-link device includes a station" in embodiments of this application.

Optionally, one multi-link device may include a plurality of logical stations, and each logical station operates on one link, but the plurality of logical stations are allowed to operate on a same link. A link identifier mentioned below represents one station operating on one link. In other words, if there is more than one station on one link, more than one link identifier is required to represent the more than one station. A link mentioned below sometimes also represents a station operating on the link.

When data is to be transmitted between the AP multi-link device and the STA multi-link device, a link identifier may be used to identify one link or a station on one link. Before communication, the AP multi-link device and the STA multi-link device may first negotiate or communicate with each other about a correspondence between a link identifier and one link or a station on one link. Therefore, during data transmission, the link identifier is carried without transmitting a large amount of signaling information to indicate the link or the station on the link. This reduces signaling overheads and improves transmission efficiency.

In an example, when the AP multi-link device establishes a basic service set (basic service set, BSS), a sent management frame (for example, a beacon frame) carries an element including a plurality of link identifier information fields. Each link identifier information field indicates a correspondence between a link identifier and a station operating on a link. Each link identifier information field includes a link identifier, and further includes one or more of a MAC address, an operation set, and a channel number, where the one or more of the MAC address, the operation set, and the channel number may indicate a link. In another example, in a multi-link association establishment process, the AP multi-link device and the STA multi-link device negotiate a plurality of link identifier information fields. In subsequent communication, the AP multi-link device or the STA multi-link device represents a station in the multi-link device by using a link identifier. The link identifier may further represent one or more attributes of a MAC address, an operation set, and a channel number of the station. The MAC address may alternatively be an association identifier (association identifier, AID) of the associated AP multi-link device.

If a plurality of stations operate on one link, the link identifier (which is a numeric ID) represents an operation set and a channel number in which the link is located, and represents an identifier of a station operating on the link, for example, a MAC address or an association identifier AID of the station.

The multi-link device may implement wireless communication in compliance with the IEEE 802.11 series protocols. For example, the multi-link device may be a station in compliance with an extremely high throughput, based on IEEE 802.11be, or compatible with IEEE 802.11be, to implement communication with other devices.

The multi-link communication method provided in embodiments of this application may be applied to a scenario in which one node performs data transmission with one or more nodes, or may be applied to a single-user uplink/downlink data transmission scenario or a multi-user uplink/downlink data transmission scenario, or may be applied to a device-to-device (device-to-device, D2D) data transmission scenario.

Any one of the foregoing nodes may be an AP multi-link device, or may be a multi-link STA device. For example, the multi-link communication method may be applied to a scenario in which data transmission is performed between an AP multi-link device and a STA multi-link device, a scenario in which data transmission is performed between a STA multi-link device and a STA multi-link device, or a scenario in which data transmission is performed between an AP multi-link device and an AP multi-link device. This is not limited in embodiments of this application.

Optionally, one of two communication parties in the multi-link communication method in embodiments of this application does not support STR. For example, if a sender in the two communication parties supports STR, a receiver does not support STR (that is, non-STR); or if a sender in the two communication parties does not support STR, a receiver supports STR.

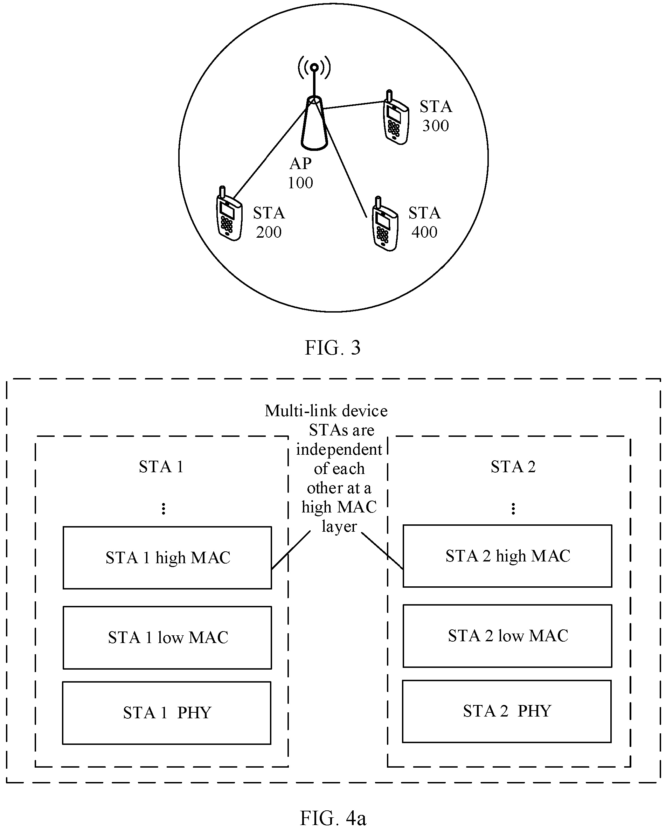

FIG. 3 is a schematic diagram of an architecture of a wireless communication system according to an embodiment of this application. FIG. 3 uses a wireless local area network as an example. The wireless communication system includes one AP multi-link device 100 and one or more STA multi-link devices (for example, a STA multi-link device 200, a STA multi-link device 300, and a STA multi-link device 400 in FIG. 3). The AP multi-link device is a multi-link device that provides a service for the STA multi-link device, and the STA multi-link device may communicate with the AP multi-link device by using a plurality of links, to improve a throughput. A quantity of AP multi-link devices and a quantity of STA multi-link devices in FIG. 3 are merely an example.

For example, a multi-link device (for example, any one of the AP multi-link device 100, the STA multi-link device 200, the STA multi-link device 300, and the STA multi-link device 400 in FIG. 3) is an apparatus having a wireless communication function. The apparatus may be an entire device, or may be a chip, a processing system, or the like installed in an entire device. A device in which these chips or processing systems are installed may be controlled by these chips or processing systems, to implement the method and a function in embodiments of this application. For example, the STA multi-link device in embodiments of this application has a wireless transceiver function, may support the 802.11 series protocols, and may communicate with the AP multi-link device or another STA multi-link device. For example, the STA multi-link device is any user communication device that allows a user to communicate with an AP and then communicate with the WLAN. For example, the STA multi-link device may be user equipment that can be connected to a network, such as a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone, may be an internet of things node in the internet of things, or may be a vehicle-mounted communication apparatus in the internet of vehicles. The STA multi-link device may alternatively be a chip and a processing system in the foregoing terminals. The AP multi-link device in embodiments of this application is an apparatus that provides a service for the STA multi-link device, and may support the 802.11 series protocols. For example, the AP multi-link device may be a communication entity such as a communication server, a router, a switch, or a bridge, or the AP multi-link device may include various forms of macro base stations, micro base stations, relay stations, and the like. Certainly, the AP multi-link device may alternatively be chips and processing systems in the various forms of devices, to implement the method and the function in embodiments of this application.

It can be understood that the multi-link device may support high-rate and low-latency transmission. With continuous evolution of application scenarios of the wireless local area network, the multi-link device may be further applied to more scenarios, for example, a sensor node (for example, a smart meter, a smart electricity meter, and a smart air detection node) in a smart city, a smart device (for example, a smart camera, a projector, a display screen, a TV, a stereo, a refrigerator, and a washing machine) in smart home, a node in the internet of things, an entertainment terminal (for example, a wearable device such as an AR and a VR), a smart device (such as a printer and a projector) in a smart office, an IoV device in the internet of vehicles, and some infrastructures (for example, a vending machine, a self-service navigation station of a supermarket, a self-service cash register device, and a self-service ordering machine) in daily life scenarios. Specific forms of the STA multi-link device and the AP multi-link device are not limited in embodiments of this application, and are merely described as examples herein. The 802.11 protocol may be a protocol that supports 802.11be or is compatible with 802.11be.

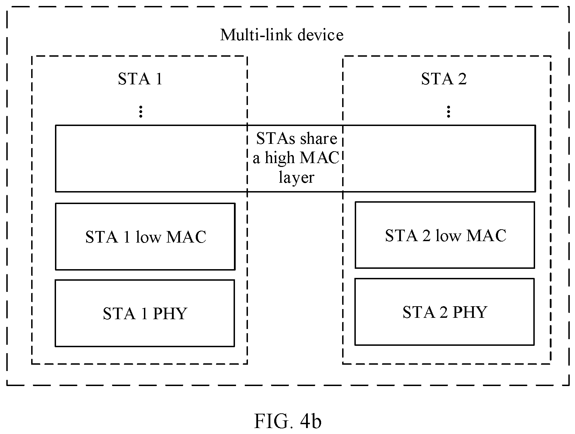

Optionally, refer to FIG. 4a. FIG. 4a is a schematic diagram of a structure of a multi-link device according to an embodiment of this application. The IEEE 802.11 standard focuses on an 802.11 physical layer (physical layer, PHY) part and a medium access control (medium access control, MAC) layer part in a multi-link device. As shown in FIG. 4a, a plurality of STAs included in the multi-link device are independent of each other at a low MAC (low MAC) layer and a PHY layer, and are also independent of each other at a high MAC (high MAC) layer. FIG. 4b is a schematic diagram of another structure of a multi-link device according to an embodiment of this application. As shown in FIG. 4b, a plurality of STAs included in the multi-link device are independent of each other at a low MAC (low MAC) layer and a PHY layer, and share a high MAC (high MAC) layer. Certainly, in a multi-link communication process, a STA multi-link device may use a structure in which high MAC layers are independent of each other, and an AP multi-link device uses a structure in which high MAC layers are shared. Alternatively, a STA multi-link device may use a structure in which high MAC layers are shared, and an AP multi-link device use a structure in which high MAC layers are independent of each other. Alternatively, both a STA multi-link device and an AP multi-link device may use a structure in which high MAC layers are shared. Alternatively, a STA multi-link device and an AP multi-link device may both use a structure in which high MAC layers are independent of each other. A schematic diagram of an internal structure of the multi-link device is not limited in embodiments of this application. FIG. 4a and FIG. 4b are merely examples for description. For example, the high MAC layer or the low MAC layer may be implemented by one processor in a chip system of the multi-link device, or may be implemented by different processing modules in a chip system.

For example, the multi-link device in embodiments of this application may be a single-antenna device, or may be a multi-antenna device. For example, the multi-link device may be a device with more than two antennas. A quantity of antennas included in the multi-link device is not limited in embodiments of this application. In embodiments of this application, the multi-link device may allow services of a same access category to be transmitted on different links, or even allow same data packets to be transmitted on different links. Alternatively, the multi-link device may not allow services of a same access category to be transmitted on different links, but may allow services of different access categories to be transmitted on different links.

A band in which the multi-link device operates may include one or more bands of sub 1 GHz, 2.4 GHz, 5 GHz, 6 GHz, and a high frequency 60 GHz.

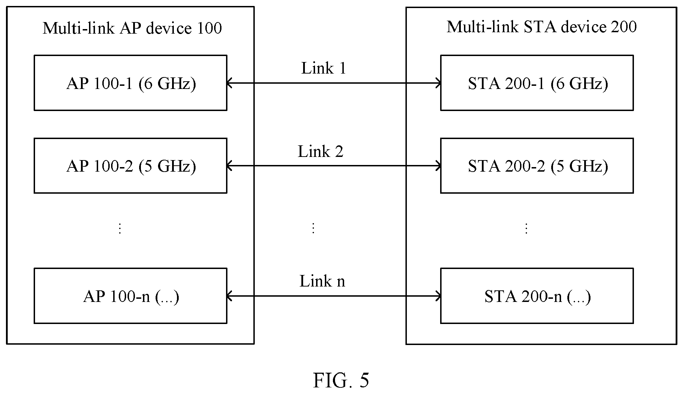

Optionally, refer to FIG. 5. FIG. 5 is a schematic diagram of communication between an AP multi-link device and a STA multi-link device according to an embodiment of this application. As shown in FIG. 5, an AP multi-link device 100 includes an affiliated AP 100-1, an affiliated AP 100-2, ..., and an affiliated AP 100-n, and a STA multi-link device 200 includes an affiliated STA 200-1, an affiliated STA 200-2, ..., and an affiliated STA 200-n. The AP multi-link device 100 and the STA multi-link device 200 concurrently perform communication by using a link 1, a link 2, ..., and a link n. One AP in the AP multi-link device may establish one link with one STA in the STA multi-link device for communication. For example, the AP 100-1 in the AP multi-link device 100 establishes the link 1 with the STA 200-1 in the STA multi-link device for communication, and the AP 100-2 in the AP multi-link device 100 establishes the link 2 with the STA 200-2 in the STA multi-link device for communication. Similarly, for communication between AP multi-link devices and communication between STA multi-link devices, refer to communication between the AP multi-link device and the STA multi-link device. Details are not described herein.

It may be understood that FIG. 5 describes, as an example, bands supported by the AP multi-link device. However, in actual application, the AP multi-link device and the STA multi-link device may further support more or fewer bands, in other words, the AP multi-link device and the STA multi-link device may operate on more links or fewer links. This is not limited in embodiments of this application.

Optionally, if the AP multi-link device 100 supports STR, but the STA multi-link device 200 does not support STR, when the STA multi-link device 200 has a short frequency spacing on a plurality of links, sending a signal on one link interferes with receiving a signal on another link. Consequently, the STA multi-link device 200 cannot simultaneously access the plurality of links for data transmission, and cannot increase a transmission rate through multi-link concurrent communication.

Therefore, embodiments of this application provide a multi-link communication method, to support a non-simultaneous transmit and receive multi-link device to concurrently perform data transmission in a same transmission direction on a plurality of links, thereby reducing mutual interference between the plurality of links. For example, when a frequency spacing between a plurality of bands is short, interference between the plurality of links can be reduced, to improve communication efficiency.

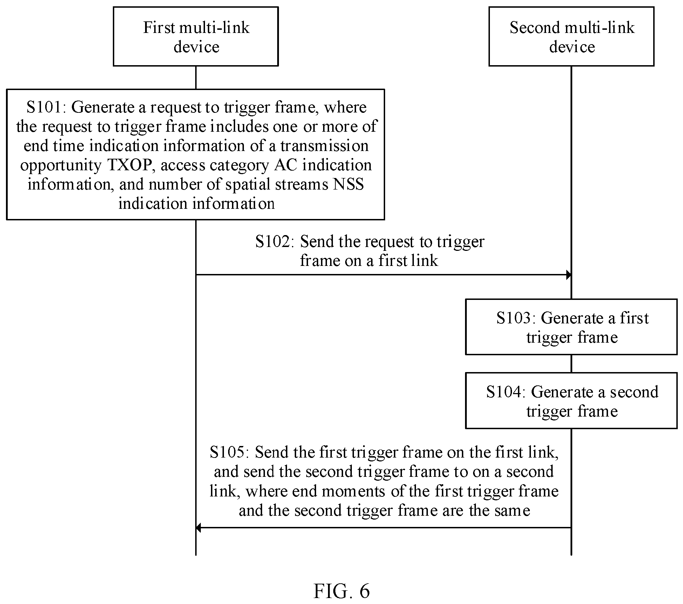

The following describes in detail the multi-link communication method provided in embodiments of this application with reference to FIG. 6 to FIG. 13. In embodiments of this application, a first multi-link device and a second multi-link device are used to describe the method.

In some feasible implementations, either of the first multi-link device and the second multi-link device in embodiments of this application does not support STR. It may be understood that "supporting STR" described in this application may mean that a multi-link device has an STR capability and uses the STR capability in this communication. "not supporting STR" may mean that a multi-link device does not have an STR capability, or may mean that a multi-link device has an STR capability but does not use the STR capability in this communication. It may be further understood that the multi-link device may implement switching between STR and non-STR in some cases, in other words, switching from supporting STR to not supporting STR, or switching from not supporting STR to supporting STR. The following describes the multi-link communication method provided in embodiments of this application by using an example in which the first multi-link device does not support STR and the second multi-link device supports STR.

Optionally, the first multi-link device in embodiments of this application may be the STA multi-link device 200 in FIG. 5, and the second multi-link device may be the AP multi-link device 100 in FIG. 5. It may be understood that, for ease of description, the following uses an example in which the AP multi-link device 100 includes two APs (for example, the AP 100-1 and the AP 100-2 in FIG. 5) and the STA multi-link device 200 includes two STAs (for example, the STA 200-1 and the STA 200-2 in FIG. 5) for description. A first station in embodiments of this application may be any STA in the STA multi-link device 200, and a second station is the other STA in the STA multi-link device 200. A first access point may be any AP in the AP multi-link device 100, and a second access point is the other AP in the AP multi-link device 100. For example, the first station is the STA 200-1, the second station is the STA 200-2, the first access point is the AP 100-1, and the second access point is the AP 100-2; or the first station is the STA 200-2, the second station is the STA 200-1, the first access point is the AP 100-2, and the second access point is the AP 100-1.

FIG. 6 is a schematic flowchart of a multi-link communication method according to an embodiment of this application. As shown in FIG. 6, the multi-link communication method in this embodiment of this application includes but is not limited to the following steps.

S101: A first station of a first multi-link device generates a request to trigger frame, where the request to trigger frame includes one or more of end time indication information of a transmission opportunity TXOP, access category AC indication information, and number of spatial streams NSS indication information.

S102: The first station of the first multi-link device sends the request to trigger frame to a first access point of a second multi-link device on a first link. Correspondingly, the first access point of the second multi-link device receives the request to trigger frame.

In some feasible implementations, before the first station (for example, the STA 200-1 in FIG. 5) of the first multi-link device sends the request to trigger (request to trigger) frame, the first station obtains the TXOP on the first link (for example, the link 1 in FIG. 5) through enhanced distributed channel access (enhanced distributed channel access, EDCA) contention.

In some feasible implementations, the request to trigger (request to trigger) frame may indicate that the TXOP of the first station is transferred from the first station to the first access point. Optionally, the request to trigger frame may be further used to request the second multi-link device to schedule the first station within the TXOP of the first station to perform uplink data transmission. It may be understood that a function of the request to trigger frame may be further described as follows: The request to trigger frame is used to request the second multi-link device to schedule the first multi-link device on two links (the first link and a second link herein), to align uplink PPDUs scheduled by the trigger frame on the two links, thereby improving channel use efficiency. It may be further understood that, if the uplink PPDUs scheduled by the trigger frame on the two links are not aligned, because the first multi-link device does not support STR, an uplink PPDU scheduled by the trigger frame on one of the two links cannot be correctly received.

It may be understood that "alignment" in this embodiment of this application may mean time synchronization. For example, sending start moments are aligned (that is, the same) and/or sending end moments are aligned (that is, the same). In addition, "alignment", "synchronization", "simultaneous", and "same moment" in this embodiment of this application do not mean exactly the same in a strict sense. During actual implementation, due to factors such as different PPDU transmission parameters, different access times, and transceiver processing capabilities on the two links, "alignment", "synchronization", or "simultaneous" herein allows a small offset, for example, not exceeding a short inter-frame space SIFS.

In this embodiment of this application, the two links are used as an example for description. In actual application, there may be a plurality of (more than two) links. For an implementation of the plurality of links, refer to the implementation of the two links provided in this embodiment of this application. Details are not described herein again.

S103: The first access point of the second multi-link device generates a first trigger frame.

S104: A second access point of the second multi-link device generates a second trigger frame.

S105: The first access point of the second multi-link device sends the first trigger frame to the first station of the first multi-link device on the first link, and the second access point of the second multi-link device sends the second trigger frame to a second station of the first multi-link device on the second link. Correspondingly, the first station of the first multi-link device receives the first trigger frame on the first link, and the second station of the first multi-link device receives the second trigger frame on the second link.

In some feasible implementations, before the second access point (for example, the AP 100-2 in FIG. 5) of the second multi-link device sends the second trigger frame, the second access point of the second multi-link device may obtain the TXOP on the second link (for example, the link 2 in FIG. 5) through EDCA contention.

In some feasible implementations, end moments of the first trigger frame and the second trigger frame are the same or aligned. The first trigger frame and the second trigger frame are used to schedule the first station and the second station to send uplink data at a same moment.

It may be understood that the uplink data in this embodiment of this application may be an uplink aggregated medium access control protocol data unit (aggregated MAC protocol data unit, A-MPDU) or a PPDU. For example, when the first station sends a first uplink PPDU on the first link, the second station sends a second PPDU on the second link, so that the PPDUs on the two links are aligned in time, thereby avoiding sending is on one link and receiving on another link.

Optionally, an end moment at which the first station sends uplink data may be the same as an end moment at which the second station sends uplink data, that is, sending end moments of the PPDUs on the two links are also the same/aligned.

It may be understood that FIG. 6 is merely a procedure of the multi-link communication method provided in embodiments of this application, and the multi-link communication method in this application may be alternatively implemented in other procedures. The following briefly describes time sequence procedures of the multi-link communication method in this application with reference to several specific examples. The following specific examples are merely examples for ease of understanding. In actual application, the time sequence procedures of the multi-link communication method in this application may be greater than or less than procedures in the following specific examples.

For ease of description, in the following specific examples, it is assumed that the first multi-link device (for example, a STA MLD) includes the STA 200-1 and the STA 200-2, the STA 200-1 operates on the link 1 (link 1), the STA 200-2 operates on the link 2 (link 2), the second multi-link device (for example, an AP MLD) includes the AP 100-1 and the AP 100-2, the AP 100-1 operates on the link 1, the AP 100-2 operates on the link 2, the first multi-link device does not support STR, and the second multi-link device supports STR.

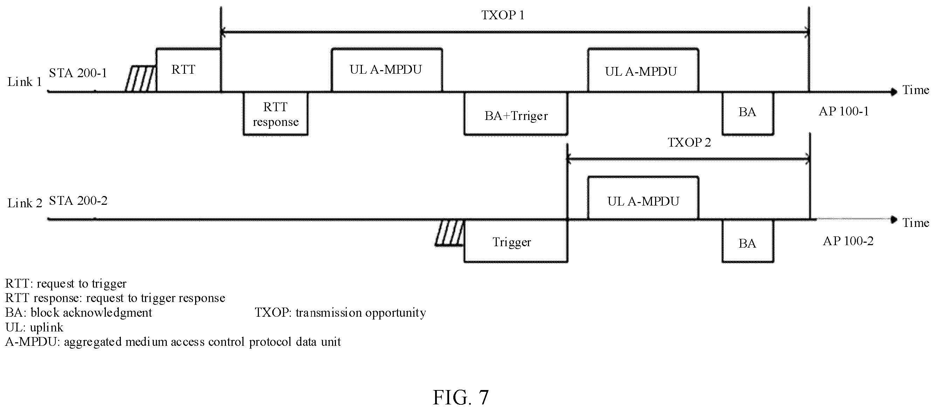

In an example, refer to FIG. 7. FIG. 7 is a schematic diagram of a time sequence of the multi-link communication method according to an embodiment of this application. As shown in FIG. 7, after obtaining the TXOP on the link 1 through EDCA contention, the STA 200-1 sends a request to trigger frame on the link 1, and requests, by using the request to trigger frame, the AP MLD to schedule the STA MLD on the two links, to align A-MPDUs on the two links. After receiving the request to trigger frame, the AP 100-1 may reply with a request to trigger response frame on the link 1. After replying with the request to trigger response frame, the AP 100-1 enables, in a scheduling manner, the STA 200-1 to send an uplink A-MPDU on the link 1.

Specifically, in a process in which the AP 100-1 waits for the AP 100-2 to obtain the TXOP on the link 2 through contention, the STA 200-1 may send the uplink A-MPDU on the link 1. After the AP 100-2 obtains the TXOP on the link 2 through EDCA contention, the AP 100-1 sends a BA+trigger frame to schedule the STA 200-1 to send uplink data on the link 1. The AP 100-2 schedules, by using a trigger (trigger) frame, the STA 200-2 to send uplink data on the link 2. An end moment of the trigger frame sent by the AP 100-2 on the link 2 is aligned/same as an end moment of the BA+trigger frame sent by the AP 100-1 on the link 1. Start moments and end moments of uplink A-MPDUs sent by the STA 200-1 and the STA 200-2 are the same/aligned. It may be understood that in the process in which the AP 100-1 waits for the AP 100-2 to obtain the TXOP on the link 2 through contention, the STA 200-1 may send more than one uplink A-MPDU on the link 1, and there may be a plurality of uplink A-MPDUs. FIG. 7 is merely an example for description. This is not limited in embodiments of this application.

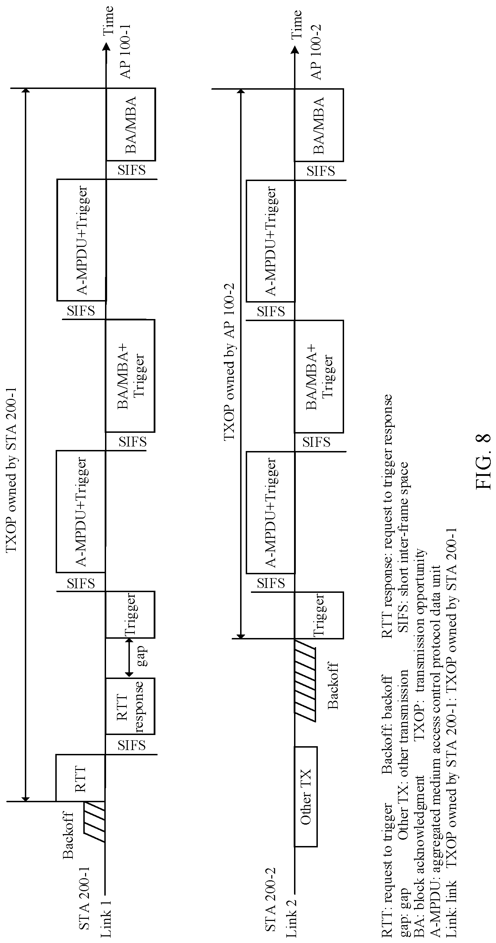

In another example, refer to FIG. 8. FIG. 8 is a schematic diagram of another time sequence of the multi-link communication method according to an embodiment of this application. As shown in FIG. 8, after obtaining the TXOP on the link 1 through EDCA contention, the STA 200-1 sends a request to trigger frame on the link 1, and requests, by using the request to trigger frame, the AP MLD to schedule the STA MLD on the two links, to align A-MPDUs on the two links. After receiving the request to trigger frame, the AP 100-1 may reply with a request to trigger response frame on the link 1, for example, an acknowledgment (acknowledgment, ACK) frame. The AP 100-1 and/or the STA 200-1 wait for a time interval (gap), so that the AP 100-2 backs off and/or obtains the TXOP through contention on the link 2 within the time interval. When the AP 100-1 sends a trigger frame on the link 1 to schedule the STA 200-1 to send uplink data transmission, the AP 100-2 sends a trigger frame on the link 2 to schedule the STA 200-2 to perform uplink data transmission. Sending end moments and/or sending start moments of the trigger frames on the link 1 and the link 2 are the same/aligned. After the STA 200-1 and the STA 200-2 receive the trigger frames, the STA 200-1 and the STA 200-2 each waits for one short inter-frame space (short inter-frame space, SIFS), and then the STA 200-1 and the STA 200-2 send uplink A-MPDUs at a same moment.

If the AP 100-1 and the AP 100-2 further need to schedule uplink data transmission after receiving the A-MPDUs, the AP 100-1 and the AP 100-2 may respectively send BA/MBA (multi-station block acknowledgment frame, Multi-STA block ACK) + Trigger frames on the link 1 and the link 2 after waiting for one SIFS. Sending end moments and/or sending start moments of the BA/MBA+trigger frames on the link 1 and the link 2 are the same/aligned. Similarly, after receiving the BA/MBA+trigger frames, the STA 200-1 and the STA 200-2 wait for one SIFS and then send uplink A-MPDUs at a same moment. If the AP 100-1 and the AP 100-2 do not need to schedule uplink data transmission after receiving the A-MPDUs, the AP 100-1 and the AP 100-2 may respectively send BA/MBA frames on the link 1 and the link 2 after waiting for one SIFS. It may be understood that the MBA frame may be used to carry acknowledgment information of a plurality of stations, or acknowledgment information of a plurality of TID services of one station.

It may be understood that the "BA+trigger frame" and the "BA/MBA+trigger frame" in this embodiment of this application may indicate that an MPDU of a BA/MBA frame is aggregated with an MPDU of a trigger frame. It may be further understood that two MPDUs may be an A-MPDU after being aggregated.

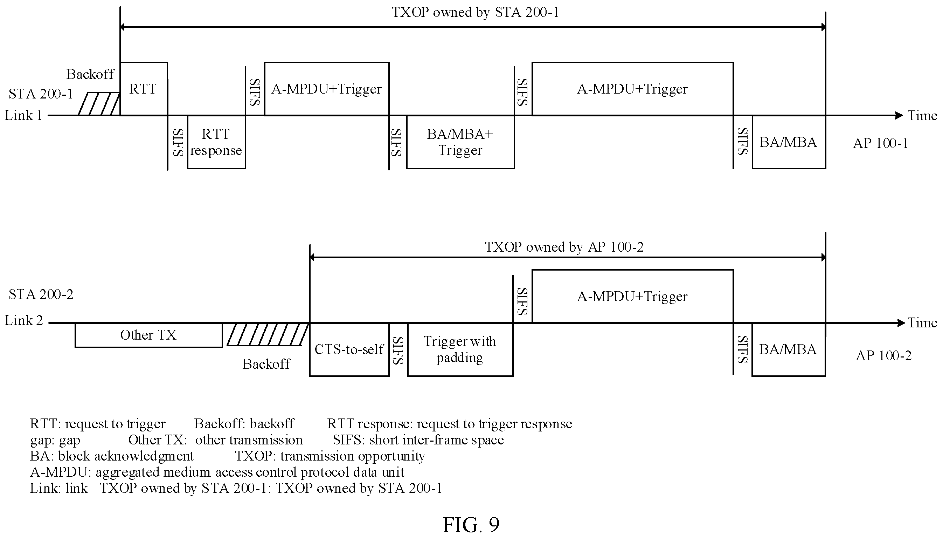

In still another example, refer to FIG. 9. FIG. 9 is a schematic diagram of still another time sequence of the multi-link communication method according to an embodiment of this application. As shown in FIG. 9, after obtaining the TXOP on the link 1 through EDCA contention, the STA 200-1 sends a request to trigger frame on the link 1, and requests, by using the request to trigger frame, the AP MLD to schedule the STA MLD on the two links, to align A-MPDUs on the two links. After receiving the request to trigger frame, the AP 100-1 waits for one SIFS and then sends a request to trigger response frame on the link 1. After receiving the request to trigger response frame, the STA 200-1 waits for one SIFS and then sends an A-MPDU+trigger frame on the link 1. After the AP100-2 backs off and obtains the TXOP through contention on the link 2 within this period of time, the AP 100-2 sends a CTS-to-self frame to protect a channel. After receiving the A-MPDU+trigger frame, the AP 100-1 waits for one SIFS and then sends a BA/MBA+trigger frame on the link 1 to schedule the STA 200-1 to perform uplink data transmission. Simultaneously, the AP 100-2 sends a trigger frame on the link 2 to schedule the STA 200-2 to perform uplink data transmission. Sending end moments and/or sending start moments of the BA/MBA+trigger frame on the link 1 and the trigger frame on the link 2 are the same/aligned. After the STA 200-1 receives the BA/MBA+trigger frame on the link 1, and the STA 200-2 receives the trigger frame on the link 2, the STA 200-1 and the STA 200-2 respectively wait for one SIFS and then send uplink A-MPDUs at a same moment. After receiving the A-MPDUs, the AP 100-1 and the AP 100-2 may respectively send BA/MBA frames on the link 1 and the link 2.

It may be understood that the "A-MPDU+trigger frame" in this embodiment of this application may indicate that the A-MPDU is aggregated with an MPDU of the trigger frame.

It can be learned from the foregoing examples that the STA 200-1 is a TXOP holder on the link 1, and the AP 100-2 is a TXOP holder on the link 2. In this case, if an A-MPDU transmission error occurs on one link and error recovery needs to be performed, it is difficult to align the two links. To facilitate error recovery after the transmission error occurs, in a possible implementation, on the link 1, the STA 200-1 transfers the TXOP to the AP 100-1, or converts the TXOP holder into the AP 100-1. This is because the AP MLD supports STR and a non-AP MLD does not support STR. In this way, when a transmission error occurs on any link, the AP MLD recovers the error, which facilitates operations.

It may be understood that, that the STA 200-1 transfers the TXOP to the AP 100-1 may mean that the STA 200-1 lends a right to use the TXOP to the AP 100-1, but the TXOP holder is still the STA 200-1, and the AP 100-1 needs to return the right to use the TXOP after using the TXOP. That the STA 200-1 converts the TXOP holder into the AP 100-1 may mean that the STA 200-1 sends the TXOP to the AP 100-1, the TXOP holder changes to the AP 100-1, and the AP 100-1 may directly release the TXOP after completing scheduling uplink transmission.

Therefore, embodiments of this application provide a multi-link communication method that supports an AP MLD to recover an error, to support error recovery by using the AP MLD after the A-MPDU transmission error occurs on a link and support simultaneous access of a plurality of links for data transmission, thereby reducing mutual interference between the plurality of links and increasing a transmission rate.

With reference to a possible procedure of the multi-link communication method in embodiments of this application, the following describes in detail implementations of the request to trigger frame, the request to trigger response frame, and the first trigger frame in embodiments of this application.

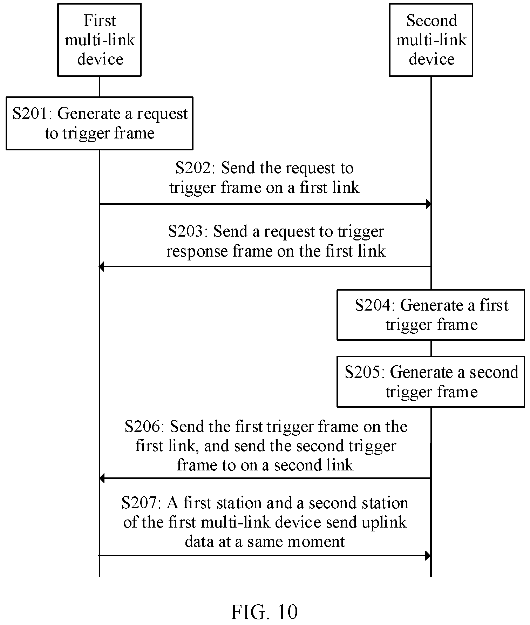

FIG. 10 is another schematic flowchart of a multi-link communication method according to an embodiment of this application. As shown in FIG. 10, the multi-link communication method provided in this embodiment of this application includes but is not limited to the following steps.

S201: A first station of a first multi-link device generates a request to trigger frame.

S202: The first station of the first multi-link device sends the request to trigger frame to a first access point of a second multi-link device on a first link. Correspondingly, the first access point of the second multi-link device receives the request to trigger frame.

In some feasible implementations, the request to trigger frame may indicate that a TXOP of the first station is transferred from the first station to the first access point, and may be further used to request the second multi-link device to schedule, within the TXOP of the first station, the first station to perform uplink data transmission. The request to trigger frame may include one or more of end time indication information of the TXOP, access category AC indication information, and number of spatial streams (number of spatial streams, NSS) indication information. The following separately describes various types of information included in the request to trigger frame.

### (1) End time indication information of the TXOP

It may be understood that, regardless of whether a right to use the TXOP or a TXOP holder is transferred, TXOP duration is limited by TXOP limit. In other words, after the TXOP of the first station is transferred from the first station to the first access point, total duration (or total use duration) of the TXOP cannot exceed a value of the TXOP limit. However, because the first access point does not know a start moment of the TXOP, the first access point does not know how long remaining time is available after the TXOP is transferred, or does not know how long remaining time reaches the TXOP limit. It may be understood that "TXOP transfer" in this embodiment of this application may refer to transfer of the right to use the TXOP, or may refer to transfer of the TXOP holder. This is not limited in this embodiment of this application. It may be understood that both the "total duration" and the "total use duration" in this embodiment of this application refer to duration from obtaining the TXOP through contention to releasing the TXOP. In this embodiment of this application, the "total duration" and the "total use duration" may be used interchangeably.

Therefore, in this embodiment of this application, the request to trigger frame carries the end time indication information of the TXOP, to indicate one or more of an end moment, the start moment, or remaining duration of the TXOP, so that in a process in which the second multi-link device schedules, within the TXOP, the first multi-link device to perform uplink data transmission, a condition that the total duration of the TXOP does not exceed the extreme duration of the TXOP is met. Specifically, this embodiment of this application provides three implementations of the end time indication information of the TXOP. Both the "extreme duration of the TXOP" and the "TXOP limit" in this embodiment of this application may refer to a period of time, and the value of the TXOP limit is the extreme duration of the TXOP. Therefore, the "extreme duration of the TXOP" and the "TXOP limit" in this embodiment of this application may be used interchangeably.

Specifically, there are three implementations of the end time indication information of the TXOP in this embodiment of this application. In a first implementation, after the TXOP of the first station is transferred from the first station to the first access point, the first access point is not allowed to extend the TXOP. In a second implementation, the request to trigger frame carries a remain TXOP length that reaches the TXOP limit. In a third implementation, the first multi-link device (for example, a STA MLD) needs to send the request to trigger frame at the start of the TXOP. The following specifically describes the foregoing three implementations.

In the first implementation, the end time indication information of the TXOP indicates the end moment of the TXOP. The end time indication information of the TXOP may include duration between an end moment of a current PPDU/A-MPDU (namely, a PPDU/A-MPDU carrying the request to trigger frame) and the end moment of the TXOP. The end time indication information of the TXOP may be carried in a duration field of the request to trigger frame. After receiving and parsing the request to trigger frame to obtain the end time indication information of the TXOP, the second multi-link device is not allowed to extend the end moment of the TXOP indicated by the duration field in the request to trigger frame. For example, it is assumed that a value of the duration field in the request to trigger frame is 3 ms. In this case, the end moment of the TXOP indicated by the duration field starts from the end moment of the current PPDU/A-MPDU and ends after 3 ms.

It may be understood that, before sending the request to trigger frame, the first station of the first multi-link device needs to estimate TXOP duration that can be used in current multi-link communication, and sets the duration field of the request to trigger frame to the estimated TXOP duration when the TXOP duration does not exceed the extreme duration of the TXOP. After receiving the request to trigger frame on the first link, the first access point of the second multi-link device may set, based on the value of the duration field in the request to trigger frame, a duration field in a frame subsequently sent by the first access point, and extension is not allowed.

It may be further understood that meanings of "extension is not allowed" and "the end moment of the TXOP indicated by the duration field in the request to trigger frame is extension is not allowed to be extended" in this embodiment of this application may be as follows: The first access point sets a value of the duration field in the frame subsequently sent by the first access point to be less than a value of a duration field in a previous frame.

In the second implementation, the end time indication information of the TXOP indicates the remaining duration of the TXOP. The remaining duration of the TXOP may be less than or equal to the extreme duration of the TXOP minus sending duration of the request to trigger frame. In other words, the remaining duration of the TXOP may be remaining duration for extending the current TXOP after a sending end moment of the request to trigger frame, and it can be ensured that the remaining duration of the TXOP does not exceed the TXOP limit. After the second multi-link device receives and parses the request to trigger frame to obtain the end time indication information of the TXOP, the second multi-link device is allowed to extend the TXOP duration after receiving the request to trigger frame. However, extended TXOP duration cannot exceed the remain TXOP length indicated in the request to trigger frame, namely, the remaining duration of the TXOP.

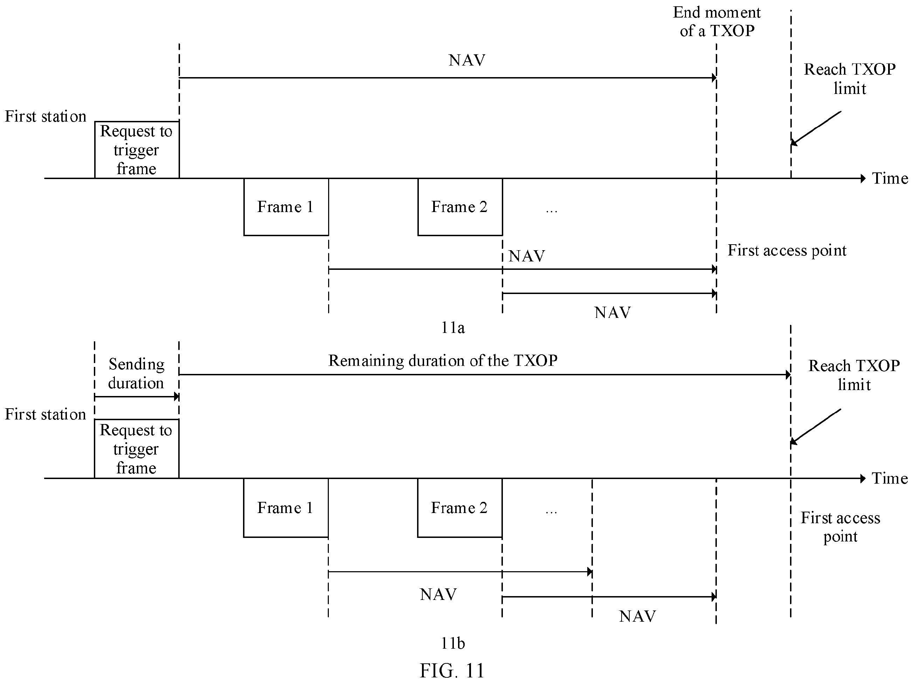

FIG. 11 is a schematic diagram of the end moment and the remaining duration of the TXOP according to an embodiment of this application. 11a in FIG. 11 shows the value of the duration field in the request to trigger frame and the value of the duration field in the frame subsequently sent by the second multi-link device. The value of the duration field in 11a in FIG. 11 is represented by an NAV. 11b in FIG. 11 shows the remaining duration of the TXOP and the TXOP duration subsequently extended by the second multi-link device.

In the third implementation, the end time indication information of the TXOP indicates the start moment of the TXOP. In addition, the request to trigger frame further includes access category (AC) indication information, and the AC indication information may indicate an access category of the TXOP obtained by the first station through contention. It can be learned from Table 1 that a value of the TXOP limit may be obtained by using an access category. In other words, the second multi-link device may determine the TXOP limit based on the access category indicated by the AC indication information. The start moment of the TXOP may be obtained by restricting a first frame sent by the first station of the first multi-link device after obtaining the TXOP through contention as a request to trigger frame. That is, if the request to trigger frame is the first frame sent by the first station after the first station obtains the TXOP through contention, after receiving the request to trigger frame on the first link, the first access point of the second multi-link device uses a start moment at which a PPDU carrying the request to trigger frame is sent as the start moment of the TXOP.

In this embodiment of this application, the request to trigger frame indicates the start moment of the TXOP and the access category of the TXOP obtained by the first station through contention, and the TXOP limit is determined based on the access category. Therefore, after the TXOP of the first station is transferred from the first station to the first access point, the total duration of the TXOP is effectively prevented from exceeding the extreme duration of the TXOP.

Optionally, in most cases, channel protection needs to be first performed based on RTS/CTS frame when the TXOP starts. Therefore, if RTS/CTS-based channel protection is allowed to be performed before sending the request to trigger frame, a further constraint needs to be performed, so that the second multi-link device can obtain an accurate start moment of the TXOP. Specifically, on one hand, the RTS frame may be constrained to be sent by the first station of the first multi-link device to the first access point of the second multi-link device, so that the first access point deduces a sending start moment of the RTS frame based on a frame length and a receiving moment of the RTS frame. A sending start moment of a PPDU carrying the RTS frame is the start moment of the TXOP. On the other hand, both the RTS frame and the CTS frame may be constrained to be sent by using a fixed length (which is referred to as a time length or duration herein). For example, transmission is performed by using a lowest modulation and coding scheme (modulation and coding scheme, MCS), a single spatial stream, and a 20 MHz bandwidth (a non-high throughput (non-high throughput) duplicated (duplicated) format is used when a bandwidth is greater than 20 MHz). In addition, the request to trigger frame indicates whether RTS/CTS-based channel protection is used. After receiving the request to trigger frame, the first access point of the second multi-link device may deduce the start moment of the TXOP based on whether RTS/CTS-based channel protection is used that is indicated by the request to trigger frame. If the request to trigger frame indicates that RTS/CTS-based channel protection is used, the first access point of the second multi-link device may calculate the start moment of the TXOP based on a length (namely, duration) of the RTS/CTS. A specific operation method is as follows: If the request to trigger frame indicates that RTS/CTS-based channel protection is not used, a sending start moment of the PPDU carrying the request to trigger frame is the start moment of the TXOP; or if the request to trigger frame indicates that RTS/CTS-based channel protection is used, the start moment of the TXOP is obtained by subtracting (RTS sending duration + CTS sending time + 2*SIFS) from the sending start moment of the PPDU carrying the request to trigger frame. It should be explained herein that if only whether only RTS/CTS is used is indicated, at most one RTS/CTS interaction is allowed to be sent before the request to trigger frame. If a plurality of groups of RTS/CTS interactions are allowed, the number of used RTS/CTS interactions needs to be indicated in the request to trigger frame. In addition, the method is further applicable to an MU-RTS/CTS interaction procedure. When the MU-RTS/CTS interaction procedure is used, the RTS sending duration in the foregoing descriptions should be replaced with MU-RTS sending duration.

It may be understood that the foregoing first implementation is the simplest, and can reduce overheads in the request to trigger frame. The foregoing second and third implementations are more flexible, and when error recovery needs to be performed after a transmission error occurs, the first access point may adjust the TXOP duration in an error recovery process.

### (2) Access category (AC) indication information

The AC indication information carried in the request to trigger frame may indicate the access category of the TXOP obtained by the first station through contention. The access category indicated by the AC indication information may be used to determine the extreme duration of the TXOP (or the TXOP limit), and the total use duration of the TXOP does not exceed the extreme duration of the TXOP (or the value of the TXOP limit). Optionally, the access category indicated by the AC indication information is used to enable the second multi-link device to learn of the value of the TXOP limit corresponding to the access category, so that the total use duration of the TXOP does not exceed the extreme duration of the TXOP.

Optionally, in an EDCA mechanism, each AC maintains a backoff counter. After a backoff counter of an AC backs off to 0, a TXOP may be obtained. The AC that obtains the TXOP is referred to as a primary AC. Only data of the primary AC is allowed to be transmitted within the TXOP. Alternatively, after data transmission of the primary AC is completed, data of another AC whose priority is higher than that of the primary AC may be allowed to be transmitted. Alternatively, when multi-user multiple-input multiple-output (multi-user multiple-input multiple-output MU-MIMO) is used for transmission, data of a non-primary AC may be transmitted to another user when data of the primary AC is transmitted to one user. Therefore, the access category indicated by the AC indication information may be used to determine a preferred access category (preferred AC) subfield in the trigger frame used by the second multi-link device to perform uplink data scheduling. The preferred AC subfield may be used to advise the first station of the first multi-link device to send data of a preferred AC or data of an AC with a higher priority. After receiving the AC indication information, the first access point of the second multi-link device may set the preferred AC subfield in the trigger frame based on the access category indicated by the AC indication information, to advise, by using the preferred AC subfield, the first station of the first multi-link device to send data of a specific access category.

Specifically, an implementation of the AC indication information includes one or more of the following:
(1) The AC indication information indicates the primary AC, and the primary AC is an access category of the TXOP obtained through contention, so that the first access point of the second multi-link device preferably schedules the data of the primary AC during uplink data scheduling. In other words, the preferred AC subfield indicates the primary AC. In this embodiment of this application, the AC indication information indicates the primary AC, so that the second multi-link device preferably schedules the data of the primary AC during uplink data scheduling, thereby ensuring permission of the primary AC to some extent and ensuring fairness to some extent.
(2) The AC indication information indicates an AC having buffered data in the first station, and the AC indication information may be presented in a form of a bitmap (bitmap). In other words, the request to trigger frame may carry a bitmap of the AC having buffered data in the first station, so that the first access point of the second multi-link device can schedule the AC having buffered data during uplink data scheduling. In other words, the preferred AC subfield indicates the AC having buffered data in the first station. Optionally, a 4-bit bitmap is used to respectively represent four different access categories. When a bit is set to 1, it indicates that an access category corresponding to the set bit 1 is the AC having buffered data in the first station.
   In embodiments of this application, the bitmap indicates the AC having buffered data, so that the second link device can schedule data including the buffered data during uplink data scheduling, thereby improving data transmission efficiency.
(3) The AC indication information indicates an AC having a lowest priority of buffered data in the first station, so that the first access point of the second multi-link device sets the preferred AC subfield to be higher than or equal to the AC indicated by the AC indication information during uplink data scheduling.
(4) The AC indication information indicates an AC having a highest priority of buffered data in the first station or a most urgent current latency requirement, so that the first access point of the second multi-link device can preferably schedule data of the AC having the highest priority or the most urgent current latency requirement. In other words, the preferred AC subfield indicates the AC having the highest priority of buffered data in the first station or the most urgent current latency requirement.

In this embodiment of this application, the AC indication information is used to notify the second multi-link device of the access category of the TXOP obtained through contention, the AC having buffered data, the AC having the highest/lowest priority of buffered data, or the AC having the most urgent current latency requirement, so that the second multi-link device sets, according to the AC indication information, the preferred AC subfield in the trigger frame for uplink data scheduling, and schedules, by using the preferred AC subfield, the first multi-link device to send corresponding data. In this way, uplink data can be scheduled in a targeted manner.

Optionally, the AC indication information may be further used to determine whether to synchronously schedule the first station and a second station of the first multi-link device on the first link and a second link. After receiving the request to trigger frame, the first access point of the second multi-link device may determine whether a priority of the access category (namely, a primary AC on the second link) of the TXOP obtained by a second access point of the second multi-link device through contention on the second link is higher than or equal to a priority of the AC indicated by the AC indication information. If the priority of the primary AC on the second link is higher than or equal to the priority of the AC indicated by the AC indication information, the second multi-link device determines to synchronously schedule the first station and the second station of the first multi-link device on the first link and the second link. For example, the second access point synchronously schedules the first station and the second station on the two links only when the primary AC on the second link is the same as the AC carried in the request to trigger frame on the first link. Alternatively, the second access point synchronously schedules the first station and the second station on the two links only when the priority of the primary AC on the second link is higher than the priority of the AC carried in the request to trigger frame on the first link.

It may be understood that, in this embodiment of this application, after obtaining the TXOP through contention, the first station sends the request to trigger frame to the first access point, to request the first access point to schedule the first station to perform uplink data transmission, and adds the AC indication information to the request to trigger frame, so that the first access point schedules the uplink data of the first station in a targeted manner. Therefore, the first access point can be constrained to schedule the uplink data of the first station during uplink scheduling, thereby ensuring fairness of the first station.

### (3) Number of spatial streams NSS indication information

It may be understood that, after the TXOP of the first station is transferred from the first station to the first access point, the first access point may schedule uplink MU-MIMO transmission. However, because the TXOP is obtained by the first station through contention, to improve fairness, a requirement of the first station needs to be preferably met. If there is still a remaining space resource after the requirement of the first station is met, another station is allowed to be scheduled. Optionally, the request to trigger frame is a control frame, is usually transmitted in a non-HT-PPDU, and is usually transmitted by using a single spatial stream. Therefore, the request to trigger frame needs to carry the NSS to preferably meet the requirement of the first station.

Therefore, in this embodiment of this application, the request to trigger frame carries the NSS indication information, to indicate a number of spatial streams required by the first station for sending the uplink data, so that when scheduling the first station to transmit the uplink data, the first access point allocates a sufficient number of spatial streams to the first station, to preferably meet the requirement of the first station and improve fairness.

Specifically, the NSS indication information may indicate the number of spatial streams required by the first station for sending the uplink data. The number of spatial streams indicated by the NSS indication information may be determined in an explicit manner. The NSS indication information may be carried in a minimum number of spatial streams field (minimum NSS field) in the request to trigger frame. A meaning of the minimum number of spatial streams field may be the minimum number of spatial streams required when the first station performs uplink data transmission. The first station may determine, based on a dynamic change of a channel condition, the number of spatial streams required by the first station for sending the uplink data, and add the number of spatial streams to the minimum number of spatial streams field in the request to trigger frame.

In this embodiment of this application, a field (namely, the minimum number of spatial streams field) is added to the request to trigger frame to explicitly indicate the number of spatial streams required by the first station for sending the uplink data. The number of spatial streams required by the first station for sending the uplink data may be flexibly adjusted based on a dynamic change (such as interference and channel fading) of a channel, and the more proper number of spatial streams may be allocated to the first station while the requirement of the first station is met. This reduces a waste of spatial streams during uplink data scheduling.

Optionally, the number of spatial streams indicated by the NSS indication information may alternatively be determined in an implicit manner. The request to trigger frame carries the number of spatial streams used by the first station to send the request to trigger frame. Therefore, after receiving the request to trigger frame, the first access point may use the number of spatial streams used to send the request to trigger frame as the minimum number of spatial streams allocated by the first access point to the first station during uplink data scheduling. It may be understood that the number of spatial streams allocated by the first access point to the first station during uplink data scheduling may be greater than or equal to the number of spatial streams used by the first station to send the request to trigger frame. Alternatively, in an association (association) process of random access, the first station notifies the first access point of the maximum number of spatial streams supported by the first station. Therefore, the number of spatial streams allocated by the first access point to the first station during uplink data scheduling may be greater than or equal to the maximum number of spatial streams supported by the first station. It may be understood that in this case, the request to trigger frame does not need to carry the NSS indication information.

It may be understood that in this embodiment of this application, the number of spatial streams allocated by the first access point to the first station is determined/indicated in the implicit manner, so that signaling overheads can be reduced.

S203: The first access point of the second multi-link device sends a request to trigger response frame to the first station of the first multi-link device on the first link.

In some feasible implementations, after receiving the request to trigger frame, the first access point of the second multi-link device may return the request to trigger response frame to the first station. When the request to trigger frame indicates that the TXOP of the first station is transferred from the first station to the first access point, the request to trigger response frame may indicate the first access point to confirm that the TXOP of the first station is transferred from the first station to the first access point. Optionally, the first station requests, by using the request to trigger frame, to transfer the TXOP obtained by the first station through contention to the first access point, and the first access point agrees, by using the request to trigger response frame, to a request of the first station. When the request to trigger frame is used to request the second multi-link device to schedule the first station within the TXOP of the first station to perform uplink data transmission, the request to trigger response frame may be used to confirm that the second multi-link device schedules the first station within the TXOP of the first station to perform uplink data transmission.

In some feasible implementations, the request to trigger response frame may be an acknowledgment frame, a trigger frame, a clear to send frame, or the like.

S204: The first access point of the second multi-link device generates a first trigger frame.

S205: The second access point of the second multi-link device generates a second trigger frame.

S206: The first access point of the second multi-link device sends the first trigger frame to the first station of the first multi-link device on the first link, and the second access point of the second multi-link device sends the second trigger frame to a second station of the first multi-link device on the second link. Correspondingly, the first station of the first multi-link device receives the first trigger frame on the first link, and the second station of the first multi-link device receives the second trigger frame on the second link.

In some feasible implementations, end moments of the first trigger frame and the second trigger frame are the same or aligned. Optionally, an end moment at which the first station sends uplink data may be the same as an end moment at which the second station sends uplink data. The first trigger frame and the second trigger frame may be used to schedule the first station and the second station to send the uplink data at a same moment.

In some feasible implementations, when generating the first trigger frame, the first access point of the second multi-link device may determine a preferred AC subfield in the first trigger frame based on the AC indication information included in the request to trigger frame. The preferred AC subfield may be used to advise the first station of the first multi-link device to send data of a specific access category. For a specific implementation of determining the preferred AC subfield in the first trigger frame, refer to related descriptions of the access category (AC) indication information in step S201. Details are not described herein again.

Optionally, when generating the first trigger frame, the first access point of the second multi-link device may determine, according to the NSS indication information included in the request to trigger frame, the number of spatial streams allocated to the first station in the first trigger frame. For a specific implementation of determining the number of spatial streams allocated to the first station in the first trigger frame, refer to related descriptions of the number of spatial streams (NSS) indication information in step S201. Details are not described herein again. It may be understood that a larger number of spatial streams indicates higher data transmission efficiency.

In some feasible implementations, after the first station transfers the TXOP on the first link to the first access point by using the request to trigger frame, because the TXOP on the first link is obtained by the first station through contention instead of by the first access point through contention, the first access point needs to be constrained in the TXOP, to preferably meet permission of the first station, thereby improving fairness.

Specifically, the first access point of the second multi-link device needs to meet one or more of the following constraints: (a1) the first access point is allowed to schedule only the first station on the first link, or when the first access point schedules uplink MU-MIMO transmission, the first station is one of scheduled stations; (a2) the first access point is not allowed to perform downlink data transmission, or before uplink data transmission of the first station is completed, the first access point is not allowed to perform downlink data transmission; and (a3) to increase an uplink transmission rate, the first access point is not allowed to perform uplink orthogonal frequency division multiple access (orthogonal frequency division multiple access, OFDMA) scheduling.

S207: The first station and the second station of the first multi-link device send the uplink data at the same moment.

In some feasible implementations, the uplink data may be an uplink A-MPDU or an uplink PPDU. For example, when the first station of the first multi-link device sends an uplink PPDU 1/MPDU 1 on the first link, the second station sends an uplink PPDU 2/MPDU 2 on the second link. It may be understood that sending start moments of the uplink PPDU 1/MPDU 1 and the uplink PPDU 2/MPDU 2 are the same, and sending end moments of the uplink PPDU 1/MPDU 1 and the uplink PPDU 2/MPDU 2 may also be the same. In other words, the uplink PPDU 1/MPDU 1 and the uplink PPDU 2/MPDU 2 are completely aligned in time.

It may be understood that descriptions of implementations of the request to trigger frame, the request to trigger response frame, and the first trigger frame in embodiments of this application are applicable to the procedure shown in FIG. 10, and are also applicable to any one of the foregoing procedures in FIG. 7, FIG. 8, and FIG. 9. This is not limited in embodiments of this application.

In embodiments of this application, the request to trigger frame is used to request the second multi-link device to schedule uplink data transmission, so that PPDUs/A-MPDUs on the two links are aligned in time. In this way, a non-STR multi-link device concurrently performs data transmission in a same transmission direction on a plurality of links, to reduce mutual interference between the plurality of links. In addition, behavior of the first access point is constrained by using the various information in the request to trigger frame, so that the total duration of the TXOP does not exceed the TXOP limit, communication fairness is ensured to some extent, and communication efficiency is improved.

The foregoing description describes in detail a procedure of scheduling uplink data transmission on the plurality of links included in the multi-link communication method in embodiments of this application. The multi-link communication method in embodiments of this application may further include a return mechanism of the TXOP. The following describes the return mechanism provided in embodiments of this application.

In an optional embodiment, in embodiments of this application, it is assumed that the request to trigger frame is a new frame. It may be understood that when the first station does not need the first access point to schedule uplink data transmission or needs to terminate uplink scheduling transmission in another case, a mechanism is required to terminate the procedure of scheduling uplink data transmission. After the procedure of scheduling uplink data transmission is terminated, the TXOP needs to be returned by the first access point to the first station, or the first station restores an identity of the TXOP holder.

Specifically, embodiments of this application provide four return mechanisms.

In a first return mechanism, if the first station wants the first access point to return the right to use the TXOP, or the first station wants to restore the identity of the TXOP holder, the first station may send return information to the first access point on the first link, where the return information may indicate that the TXOP is transferred from the first access point back to the first station. The return information may be carried in an A-control field of a high efficiency (high efficiency, HE) variant high throughput (HT) control field. Optionally, when sending a scheduled uplink data frame, the first station may add a new control type to the A-control field of the HE variant HT control, to indicate that the procedure of scheduling uplink data transmission on the plurality of links is terminated. After receiving the uplink data frame that carries the new control type, the first access point is not allowed to perform any active sending except returning an acknowledgment frame for the uplink data frame. After the first access point replies with the acknowledgment frame and does not perform any active sending, the first station considers that the first access point has returned the TXOP, in other words, the TXOP is transferred from the first access point back to the first station.

It may be understood that before the first station sends the return information, the first access point may actively send a trigger frame on the first link, to schedule uplink data transmission of the first station.

In a second return mechanism, the first access point actively returns the TXOP. When the first access point does not need to respond to data of the first station, and the first access point does not actively send any frame, it is considered that the first access point needs to return the TXOP to the first station, in other words, the TXOP is transferred from the first access point back to the first station. After that, the first access point cannot perform any active sending. In other words, when a PPDU/A-MPDU does not need a response frame, and no frame is sent after the PPDU/A-MPDU, it is considered that the first access point needs to return the TXOP to the first station.

In a third return mechanism, when the first access point actively returns the TXOP, the first access point may actively send return information to the first station on the first link, where the return information may indicate that the TXOP is transferred from the first access point back to the first station. The return information may be carried in an RDG/more PPDU subfield. The return information is carried in the RDG/more PPDU subfield, or it may be understood that the RDG/more PPDU subfield indicates that the TXOP is transferred from the first access point back to the first station.

Specifically, the first access point may send, to the first station, a frame including an RDG/more PPDU subfield, for example, a QoS data frame. A value of the RDG/more PPDU subfield may be set to 0, to indicate that the TXOP is transferred from the first access point back to the first station. Optionally, the first access point may alternatively actively send, to the first station on the first link, a frame that does not carry an HT control field. The frame indicates that the TXOP is transferred from the first access point back to the first station.

In a fourth return mechanism, when the first access point actively returns the TXOP, the first access point may actively send a new control frame to the first station on the first link. The new control frame carries return information indicating that the TXOP is transferred from the first access point back to the first station, in other words, the TXOP is returned to the first station. The new control frame may be indicated by using a type (type) and a subtype (subtype) in a frame control (frame control) field, or may be indicated by adding a new control type in an A-control field of HE variant HT control. Therefore, the return information may be carried in the type field and the subtype field in the frame control field, or carried in the A-control field of the HE variant HT control.

In embodiments of this application, the procedure in which the first access point schedules uplink data transmission is terminated by using the return mechanism, so that the multi-link communication method in this application can be further optimized and/or improved.

In another optional embodiment, in embodiments of this application, some or all procedures of a reverse direction grant (reverse direction grant, RDG) mechanism may be reused. It is assumed that the request to trigger frame is not a new frame, but a special frame that reuses an RDG mechanism. Therefore, in the return mechanism in embodiments of this application, a mechanism in which an RD responder (reverse direction responder) declines (decline) the RDG may be reused.

A procedure of a conventional RDG mechanism is as follows: After obtaining a TXOP through contention, a first station performs data transmission by using the TXOP. After data in a buffer of the first station is completely sent, if there is still remaining duration of the TXOP, the first station may transfer a right to use the TXOP to a first access point. A specific transfer manner may be setting an RDG/more PPDU field (for example, an RDG/more PPDU in a QoS data frame) to 1. After obtaining the right to use the TXOP, the first access point may send downlink data to one station or a group of stations, or schedule one or more stations to perform uplink data transmission. It may be understood that the RDG cannot enable PPDUs/A-MPDUs on a plurality of links to be aligned in time, and therefore a plurality of links are not simultaneously accessed for data transmission. Consequently, mutual interference on the plurality of links is not reduced and a transmission rate is not increased.

The mechanism in which the RD responder declines (decline) the RDG includes any one of the following: 1. When an RDG PPDU does not require a response frame, no frame is sent after the RDG PPDU; 2. a control response frame whose RDG/more PPDU subfield is set to 0 is sent; and 3. a control response frame that does not carry an HT control field is sent.

Therefore, if some or all of the procedures of the RDG are reused in embodiments of this application, and it is assumed that the request to trigger frame is a special frame that reuses the RDG, the mechanism in which the RD responder declines the RDG may be reused in the return mechanism in embodiments of this application. However, on one hand, because the conventional RDG mechanism is different from a request to trigger procedure in embodiments of this application, the conventional RDG mechanism needs to be distinguished from the request to trigger procedure in embodiments of this application. It may be understood that the request to trigger procedure in embodiments of this application may be a procedure in which uplink data scheduling on the plurality of links is implemented by using the request to trigger frame.

On the other hand, because the request to trigger response frame does not have an HT control field (because the request to trigger response frame may be a trigger frame or an ACK frame, and the trigger frame or the ACK frame does not include the HT control field), based on the mechanism in which the RD responder declines the RDG, the request to trigger response frame returned by the first access point is mistakenly considered as declining the RDG, and a subsequent uplink data scheduling procedure cannot be performed.

Therefore, embodiments of this application provide a reused RDG mechanism, to implement a method for scheduling uplink data transmission and returning a TXOP, so that the conventional RDG mechanism and the request to trigger procedure can be distinguished, and a problem that the request to trigger response frame is mistakenly considered as declining the RDG can be further resolved.

In some feasible implementations, the request to trigger frame may further include request to trigger indication information, and the request to trigger indication information may be carried in an HT control field. The request to trigger indication information may indicate whether the request to trigger response frame returned by the first access point indicates that the TXOP is transferred from the first station to the first access point. Optionally, a reserved bit in the HT control field indicates whether a function of the request to trigger response frame is to confirm that the TXOP is transferred from the first station to the first access point or to decline the RDG.

Because the RDG/more PPDU subfield is set to 1 in the RDG mechanism, it indicates that the right to use the TXOP is transferred from the first station to the first access point, and the RDG/more PPDU subfield is usually carried in an HT variant HT control field, a very high throughput (very high throughput, VHT) variant HT control field, and an HE variant HT control field. Therefore, the following describes specific implementations of different types of HT control fields and the request to trigger indication information.

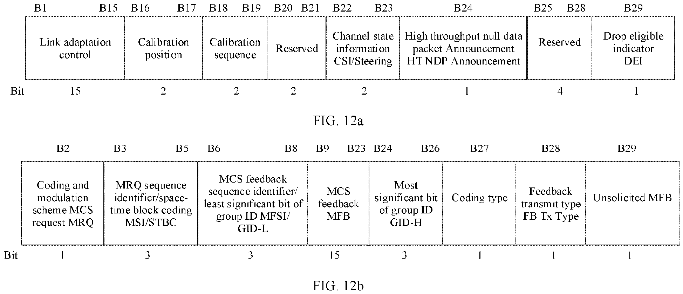

Optionally, refer to FIG. 12a. FIG. 12a is a schematic diagram of an HT variant HT control field. As shown in FIG. 12a, B20 (which refers to a 20^{th} bit) and B21 in the HT control field of the HT type are reserved bits, and some or all of the bits may be used to carry the request to trigger indication information. To be specific, some or all of the reserved bits in the HT control field of the HT type indicate that the function of the request to trigger response frame is to confirm that the TXOP is transferred from the first station to the first access point. For example, when a value of B20 in the HT control field of the HT type is 0, it indicates that the function of the request to trigger response frame is to decline the RDG; or when a value of B20 is 1, it indicates that the function of the request to trigger response frame is to confirm that the TXOP is transferred from the first station to the first access point. It may be understood that, for another example, when a value of B20 in the HT control field of the HT type is 0, it indicates that the conventional RDG mechanism is used in current communication; or when a value of B20 is 1, it indicates that the request to trigger procedure is used in current communication. It may be further understood that a value and a meaning of the reserved bit in the HT control field of the HT type are not limited in embodiments of this application.

Optionally, refer to FIG. 12b. FIG. 12b is a schematic diagram of a VHT variant HT control field. As shown in FIG. 12b, because there is no reserved bit in the HT control field of the VHT type, the request to trigger indication information may be carried in another manner. For example, the request to trigger indication information is indicated in a form of signaling. Alternatively, the request to trigger procedure is not supported in the VHT variant HT control. To be specific, if the request to trigger frame includes the HT control field of the VHT type, it indicates that the conventional RDG mechanism is used in current communication.

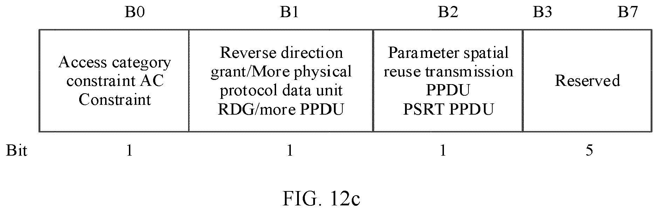

Optionally, refer to FIG. 12c. FIG. 12c is a schematic diagram of an A-control subfield in an HE variant HT control field. As shown in FIG. 12c, the A-control subfield may carry information of a plurality of control types. Control information of a command and status (command and status, CAS) type includes an RDG/more PPDU subfield and five reserved bits (B3 to B7). Some or all of the bits may be used to carry the request to trigger indication information. Optionally, some or all of the reserved bits in the control information of the CAS type indicate that the function of the request to trigger response frame is to confirm that the TXOP is transferred from the first station to the first access point. For example, when a value of B3 in the control information of the CAS type is 0, it indicates that the function of the request to trigger response frame is to decline the RDG, or indicates that the conventional RDG mechanism is used in current communication; or when a value of B3 is 1, it indicates that the function of the request to trigger response frame is to confirm that the TXOP is transferred from the first station to the first access point, or indicates that the request to trigger procedure is used in current communication.

In some other feasible implementations, in embodiments of this application, in addition to carrying the request to trigger indication information by using the request to trigger frame, to indicate whether the function of the request to trigger response frame is to confirm that the TXOP is transferred from the first station to the first access point, whether the function of the request to trigger response frame is to confirm that the TXOP is transferred from the first station to the first access point may be indicated in another frame, or may be indicated by adding the RDG/more PPDU subfield to the request to trigger response frame.

Specifically, after receiving the request to trigger frame on the first link, the first access point may send an aggregated QoS null frame to the first station on the first link. When a value of an RDG/more PPDU subfield carried in the aggregated QoS null frame is 1, it indicates the first access point to confirm that the TXOP of the first station is transferred from the first station to the first access point. In this case, the request to trigger response frame returned by the first access point to the first station may be used to confirm that the request to trigger frame is received. The request to trigger response may be any control frame, for example, a trigger frame, a BA frame, a BA+trigger frame, or an ACK frame.

Optionally, the request to trigger response frame returned by the first access point to the first station on the first link may be a trigger frame. The trigger frame may include an RDG/more PPDU subfield. When a value of the RDG/more PPDU subfield is 1, it indicates the first access point to confirm that the TXOP of the first station is transferred from the first station to the first access point.

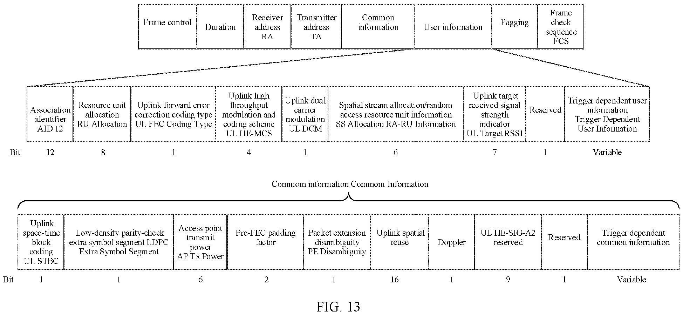

The trigger frame includes a common information field and a user information field. There are reserved bits in the common information field and the user information field. Any reserved bit in the common information field and the user information field is used as an RDG/more PPDU subfield, and a value of the RDG/more PPDU subfield is set to 1. FIG. 13 is a schematic diagram of a trigger frame according to an embodiment of this application. As shown in FIG. 13, a 63rd bit in the common information field is a reserved bit, and a 39^{th} bit in the user information field is a reserved bit. In this case, the 63rd bit in the common information field or the 39^{th} bit in the user information field may be used as an RDG/more PPDU subfield, and a value of the RDG/more PPDU subfield is set to 1.

In embodiments of this application, the request to trigger indication information is carried in the request to trigger frame to indicate, or a value of an RDG/more PPDU subfield in another frame is set to 1 to indicate, or the RDG/more PPDU subfield is added to the request to trigger response frame to indicate: whether the function of the request to trigger response frame is to confirm that the TXOP is transferred from the first station to the first access point. The conventional RDG mechanism and the request to trigger procedure in embodiments of this application may be distinguished when the RDG mechanism is reused, and the problem that the request to trigger response frame is mistakenly considered as declining the RDG can be further resolved.

It may be understood that the return mechanism used when the RDG mechanism is reused may be used independently, or may be used with reference to the foregoing embodiment (for example, FIG. 6 or FIG. 10). This is not limited in embodiments of this application.

The foregoing description describes in detail the methods provided in this application. To better implement the foregoing solutions in embodiments of this application, embodiments of this application further provide corresponding apparatuses or devices.

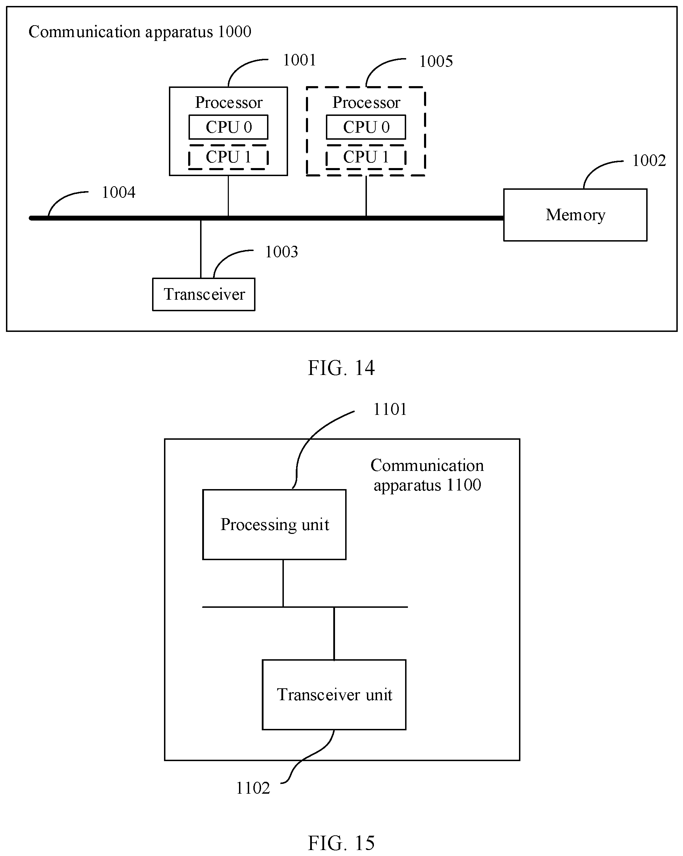

FIG. 14 is a schematic diagram of a structure of a communication apparatus according to an embodiment of this application. As shown in FIG. 14, the communication apparatus 1000 may be the first multi-link device or the second multi-link device in the foregoing embodiments, or may be a chip or a processing system in the first multi-link device or the second multi-link device, and may implement the method and the function in any one of the foregoing embodiments. Due to a difference in integration degrees, the communication apparatus 1000 may include one or more of components shown in FIG. 14. The components shown in FIG. 14 may include at least one processor 1001, a memory 1002, a transceiver 1003, and a communication bus 1004. The processor, the transceiver, the memory, and the like are connected through the bus. A specific connection medium between the foregoing components is not limited in this embodiment of this application.

The following specifically describes the components of the communication apparatus 1000 with reference to FIG. 14.

The processor 1001 is a control center of the communication apparatus 1000, and may be one processor or may be a collective term of a plurality of processing elements. For example, the processor 1001 is a central processing unit (central processing unit, CPU), an application-specific integrated circuit (Application-Specific Integrated Circuit, ASIC), one or more integrated circuits configured to implement this embodiment of this application, for example, one or more microprocessors (digital signal processor, DSP), or one or more field programmable gate arrays (Field Programmable Gate Array, FPGA). The processor 1001 may perform various functions of a communication apparatus by running or executing a software program stored in the memory 1002 and invoking data stored in the memory 1002. During specific implementation, in an embodiment, the processor 1001 may include one or more CPUs, such as a CPU 0 and a CPU 1 in FIG. 14.

During specific implementation, in an embodiment, the communication apparatus 1000 may include a plurality of processors, such as the processor 1001 and a processor 1005 shown in FIG. 14. Each of the processors may be a single-core processor (single-CPU) or may be a multi-core processor (multi-CPU). The processor herein may be one or more communication devices, circuits, and/or processing cores configured to process data (for example, computer program instructions).

The memory 1002 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or other compact disc storage, optical disc storage (including a compact disc, a laser disc, an optical disc, a digital versatile disc, a Blu-ray disc, and the like), a magnetic disk storage medium or another magnetic storage communication device, or any other medium that can be used to carry or store expected program code in an instruction form or a data structure form and that can be accessed by a computer. However, the memory 1002 is not limited thereto. The memory 1002 may exist independently, and is connected to the processor 1001 through the communication bus 1004. Alternatively, the memory 1002 may be integrated with the processor 1001. The memory 1002 is configured to store a software program for performing the solutions of this application, and the processor 1001 controls the execution.

The transceiver 1003 is configured to communicate with another device (for example, the second multi-link device). Certainly, the transceiver 1003 may be further configured to communicate with a communication network. The communication network is, for example, the Ethernet, a radio access network (radio access network, RAN), or a wireless local area network. The transceiver 1003 may include a receiving unit for implementing a receiving function, and a sending unit for implementing a sending function.

The communication bus 1004 may be an industry standard architecture (Industry Standard Architecture, ISA) bus, a peripheral component interconnect (Peripheral Component interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 14, but this does not mean that there is only one bus or only one type of bus.

In an example, the communication apparatus 1000 may be an entire device, and the communication apparatus may include a processor 1001, a memory 1002, a transceiver 1003, and a communication bus 1004. Optionally, another component, for example, a display screen, a user interface, or a signal detector may be further included. Optionally, the communication apparatus 1000 is the first multi-link device, and may be configured to implement the method and the function related to the first multi-link device in the foregoing embodiments. For example, the memory stores instructions, and when the processor invokes the instructions, the foregoing methods and functions are implemented. For example, the processor is configured to generate signaling or a frame, and the transceiver is configured to send the signaling or the frame. For example, the processor is configured to perform step S101, S201, or the like, and the transceiver is configured to perform step S102, S202, S207, or the like.

Optionally, the communication apparatus 1000 is the second multi-link device, and may be configured to implement the method and the function related to the second multi-link device in the foregoing embodiments. For example, the memory stores instructions, and when the processor invokes the instructions, the foregoing methods and functions are implemented. For example, the processor is configured to generate signaling or a frame, and the transceiver is configured to send the signaling or the frame. For example, the processor is configured to perform step S103, S104, S204, S205, or the like, and the transceiver is configured to perform step S105, S203, S206, or the like.

In another example, the communication apparatus 1000 may be a chip system or a processing system in the first multi-link device or the second multi-link device, so that a device equipped with the chip system or the processing system implements the methods and the functions in the foregoing embodiments. In this case, the communication apparatus 1000 may include some components shown in FIG. 14. For example, the communication apparatus 1000 includes a processor. The processor may be coupled to a memory, invoke instructions in the memory, and execute the instructions, so that a device configured or equipped with the chip system or the processing system implements the methods and the functions in the foregoing embodiments. Optionally, the memory may be a component in the chip system or the processing system, or may be a coupled/connected component outside the chip system or the processing system. In an example, the chip system or the processing system is installed in the first multi-link device, so that the first multi-link device implements the corresponding methods and functions in the foregoing embodiments. In still another example, the chip system or the processing system is installed in the second multi-link device, so that the second multi-link device implements the corresponding methods and functions in the foregoing embodiments.

The chip system or processing system may support communication based on 802.11 series protocols, for example, 802.11be, 802.11ax, and 802.11ac. The chip system may be installed in various devices supporting WLAN transmission scenarios. The devices in the WLAN transmission scenarios have been described in the specification of this application, and details are not described herein again.

In embodiments of this application, the first multi-link device or the second multi-link device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used.

When an integrated unit is used, FIG. 15 is a schematic diagram of another structure of a communication apparatus according to an embodiment of this application. As shown in FIG. 15, the communication apparatus 1100 may be a chip or a processing system in a multi-link device, and the communication apparatus 1100 may perform operations of the first multi-link device or the second multi-link device in the foregoing method embodiments. The communication apparatus 1100 includes a processing unit 1101 and a transceiver unit 1102.

In an example, the communication apparatus 1100 is the first multi-link device or a station in the first multi-link device.

The processing unit 1101 may be configured to control and manage an action of the communication apparatus 1100, for example, generate a request to trigger frame, and for another example, control an operation of the transceiver unit 1102. Optionally, if the communication apparatus 1100 includes a storage unit, the processing unit 1101 may further execute a program or instructions stored in the storage unit, to enable the communication apparatus 1100 to implement the methods and the functions in any one of the foregoing embodiments.

For example, the processing unit 1101 may be configured to perform, for example, step S101 in FIG. 6, or step S201 in FIG. 10, and/or another process of the technology described in this specification. All related content of the steps in the foregoing method embodiments may be cited in function descriptions of the corresponding functional modules. Details are not described herein again.

For example, the transceiver unit 1102 may receive or send data or signaling transmitted on one link, or may receive or send data or signaling transmitted on a plurality of links. Optionally, the transceiver unit 1102 may be one transceiver module, or may include a plurality of transceiver modules. When the transceiver unit 1102 is one transceiver module, the transceiver module may receive or send data on a plurality of links. For example, when the first multi-link device operates on two links, and the transceiver unit 1102 includes two transceiver modules, one transceiver module operates on one link, and the other transceiver module operates on the other link. For example, the transceiver unit 1102 may be configured to perform, for example, step S102 in FIG. 6, or steps S202 and S207 in FIG. 10, and/or another process of the technology described in this specification. All related content of the steps in the foregoing method embodiments may be cited in function descriptions of the corresponding functional modules. Details are not described herein again.

For example, the communication apparatus 1100 may be the communication apparatus shown in FIG. 14, the processing unit 1101 may be the processor 1001 in FIG. 14, and the transceiver unit 1102 may be the transceiver 1003 in FIG. 14. Optionally, the communication apparatus 1100 may further include a memory. The memory is configured to store corresponding program code and data for the communication apparatus 1100 to perform any multi-link communication method between multi-link devices provided above. Descriptions of all related content of the components in FIG. 14 may be cited in function descriptions of corresponding components of the communication apparatus 1100, and details are not described herein again.

For example, the communication apparatus 1100 may alternatively be a chip or a processor, the processing unit 1102 is a processing circuit in the chip or the processor, and the transceiver unit 1102 may be an input/output circuit in the chip or the processor. The input/output circuit is an interface for mutual communication or data exchange between the chip or the processor and another coupled component. It can be ensured that signaling, data information, or a program instruction is input to the chip or the processor for processing, processed data or signaling is output to the another coupled component, and the first multi-link device on which the chip or the processor is installed is controlled to implement a function.

In another example, the communication apparatus 1100 is the second multi-link device or an access point in the second multi-link device.

For example, the processing unit 1101 may be configured to generate the first trigger frame and/or the second trigger frame, for example, perform steps S103 and S104 in FIG. 6, or S204 and S205 in FIG. 10, and/or another process of the technology described in this specification. All related content of the steps in the foregoing method embodiments may be cited in function descriptions of the corresponding functional modules. Details are not described herein again.

For example, the transceiver unit 1102 may receive or send data or signaling transmitted on one link, or may receive or send data or signaling transmitted on a plurality of links. Optionally, the transceiver unit 1102 may be one transceiver module, or may include a plurality of transceiver modules. When the transceiver unit 1102 is one transceiver module, the transceiver module may receive or send data on a plurality of links. For example, when the second multi-link device operates on two links, and the transceiver unit 1102 includes two transceiver modules, one transceiver module operates on one link, and the other transceiver module operates on the other link. For example, the transceiver unit 1102 may be configured to perform, for example, step S105 in FIG. 6, or steps S203 and S206 in FIG. 10, and/or another process of the technology described in this specification. All related content of the steps in the foregoing method embodiments may be cited in function descriptions of the corresponding functional modules. Details are not described herein again.

For example, the communication apparatus 1100 may be the communication apparatus shown in FIG. 14, the processing unit 1101 may be the processor 1001 in FIG. 14, and the transceiver unit 1102 may be the transceiver 1003 in FIG. 14. Optionally, the communication apparatus 1100 may further include a memory. The memory is configured to store program code and data corresponding to any method provided above performed by the communication apparatus 1100. Descriptions of all related content of the components in FIG. 14 may be cited in function descriptions of corresponding components of the communication apparatus 1100, and details are not described herein again.

For example, the communication apparatus 1100 may alternatively be a chip or a processor, the processing unit 1102 is a processing circuit in the chip or the processor, and the transceiver unit 1102 may be an input/output circuit in the chip or the processor. The input/output circuit is an interface for mutual communication or data exchange between the chip or the processor and another coupled component. It can be ensured that signaling, data information, or a program instruction is input to the chip or the processor for processing, processed data or signaling is output to the another coupled component, and a device on which the chip or the processor is installed is controlled to implement a function.

An embodiment of this application further provides a computer-readable storage medium. The computer-readable storage medium stores computer program code. When the foregoing processor executes the computer program code, an electronic device performs the method in any embodiment in FIG. 6 and FIG. 10.

An embodiment of this application further provides a computer program product. When the computer program product runs on a computer, the computer is enabled to perform the method in any embodiment in FIG. 6 and FIG. 10.

An embodiment of this application further provides a communication apparatus. The apparatus may exist in a product form of a chip. The apparatus includes a processor and an interface circuit. The processor is configured to communicate with another apparatus through the interface circuit, so that the apparatus performs the method in any embodiment in FIG. 6 and FIG. 10.

An embodiment of this application further provides a communication system, including a first multi-link device and a second multi-link device. The first multi-link device and the second multi-link device may perform the method in any embodiment in FIG. 6 and FIG. 10.

Methods or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, these functions may be stored in a computer-readable medium or transmitted as one or more instructions or code in a computer-readable medium. The computer-readable medium includes a computer-readable storage medium and a communication medium, where the communication medium includes any medium that facilitates transmission of a computer program from one place to another place. The storage medium may be any available medium accessible to a general-purpose or a special-purpose computer.

In the foregoing specific implementations, the objectives, the technical solutions, and beneficial effects of this application are further described in detail. It should be understood that the foregoing descriptions are merely specific implementations of this application, but are not intended to limit the protection scope of this application.

## Claims

1. A multi-link communication method comprising:
generating (S101, S201), by a first station of a first multi-link device, a request to trigger frame, wherein the request to trigger frame comprises one or more of end time indication information of a transmission opportunity, TXOP, access category, AC, indication information, and number of spatial streams, NSS, indication information;
the method being **characterized by**:
sending (S102, S202), by the first station of the first multi-link device, the request to trigger frame to a first access point of a second multi-link device on a first link, wherein the request to trigger frame indicates that the TXOP of the first station is transferred from the first station to the first access point; and
receiving (S105, S206), by the first station of the first multi-link device on the first link, a first trigger frame from the first access point; wherein the first trigger frame is generated based on the end time indication information of the TXOP, the AC indication information, or the NSS indication information included in the request to trigger frame, and receiving (S105, S206), by a second station of the first multi-link device on a second link, a second trigger frame from a second access point of the second multi-link device, wherein end moments of the first trigger frame and the second trigger frame are the same, and
wherein by receiving, by the first station of the first multi-link device, the first trigger frame on the first link, and receiving, by the second station of the first multi-link device, the second trigger frame on the second link, the first multi-link device is scheduled, by the second multi-link device, to send uplink data on the two links at a same moment.

2. A multi-link communication method comprising:
receiving (S102, S202), by a first access point of a second multi-link device, a request to trigger frame from a first station of a first multi-link device, wherein the request to trigger frame indicates that a TXOP of the first station is transferred from the first station to the first access point, and the request to trigger frame comprises one or more of end time indication information of the transmission opportunity, TXOP, access category, AC, indication information, and number of spatial streams, NSS, indication information;
generating (S103, S204), by the first access point of the second multi-link device, a first trigger frame based on the end time indication information of the TXOP, the AC indication information, or the NSS indication information included in the request to trigger frame; and the method being **characterized by**:
generating (S104, S205), by a second access point of the second multi-link device, a second trigger frame, and scheduling, by sending the first trigger frame to the first station of the first multi-link device on a first link and sending the second trigger frame to a second station of the first multi-link device on a second link, wherein
end moments of the first trigger frame and the second trigger frame are the same, and by sending the first trigger frame to the first station of the first multi-link device on the first link and sending the second trigger frame to the second station of the first multi-link device on the second link, the second multi-link device schedules the first multi-link device to send uplink data on the two links at a same moment.

3. The method according to claim 1 or 2, wherein the end time indication information of the TXOP comprises an indication of remaining duration, and the remaining duration is less than or equal to extreme duration of the TXOP minus sending duration of the request to trigger frame.

4. The method according to any one of claims 1 to 3, wherein the AC indication information indicates an access category of the TXOP which is obtained through contention by the first station.

5. The method according to any one of claims 1 to 4, wherein the AC indication information is further used to determine the extreme duration of the TXOP, and total use duration of the TXOP does not exceed the extreme duration of the TXOP corresponding to the AC.

6. The method according to any one of claims 1 to 5, wherein the NSS indication information indicates a number of spatial streams required by the first station for sending the uplink data.

7. The method according to any one of claims 1 to 6, wherein the request to trigger frame further comprises request to trigger indication information, and the request to trigger indication information indicates whether a request to trigger response frame returned by the first access point indicates to confirm that the TXOP is transferred from the first station to the first access point.

8. The method according to any one of claims 1 and 3 to 7, wherein the method further comprises:
receiving, by the first station of the first multi-link device, the request to trigger response frame from the first access point of the second multi-link device, wherein the request to trigger response frame indicates the first access point to confirm that the TXOP of the first station is transferred from the first station to the first access point.

9. The method according to any one of claims 2 to 7, wherein the method further comprises:
sending, by the first access point of the second multi-link device, the request to trigger response frame to the first station of the first multi-link device, wherein the request to trigger response frame indicates the first access point to confirm that the TXOP of the first station is transferred from the first station to the first access point.

10. The method according to claim 8 or 9, wherein the request to trigger response frame comprises a reverse direction grant, RDG, physical layer protocol data unit, PPDU, subfield or a more PPDU subfield, and the RDG PPDU subfield or the more PPDU subfield indicates the first access point to confirm that the TXOP of the first station is transferred from the first station to the first access point.

11. The method according to any one of claims 1 and 3 to 7, wherein the method further comprises:
receiving, by the first station of the first multi-link device, an aggregated QoS null frame from the first access point of the second multi-link device, wherein a value of an RDG PPDU subfield or a more PPDU subfield carried in the aggregated QoS null frame is 1, and
the aggregated QoS null frame indicates the first access point to confirm that the TXOP of the first station is transferred from the first station to the first access point.

12. The method according to any one of claims 2 to 7, wherein the method further comprises:
sending, by the first access point of the second multi-link device, an aggregated QoS null frame to the first station of the first multi-link device, wherein a value of an RDG PPDU subfield or a more PPDU subfield carried in the aggregated QoS null frame is 1, and
the aggregated QoS null frame indicates the first access point to confirm that the TXOP of the first station is transferred from the first station to the first access point.

13. A communication apparatus (1000), comprising a processor (1001, 1005) and a memory (1002), wherein the memory (1002) is configured to store instructions; and when the processor (1001, 1005) runs the instructions, the communication apparatus (1000) is enabled to perform the method in any one of claims 1 to 12.

14. A chip or a chip system, comprising an input/output interface and a processing circuit, wherein the input/output interface is configured to exchange information or data, and the processing circuit is configured to run instructions, to enable an apparatus equipped with the chip or the chip system to perform the method according to any one of claims 1 to 12.

15. A computer-readable storage medium, wherein the computer-readable storage medium stores program instructions; and when the program instructions are run on a processor, a communication apparatus comprising the processor is enable to perform the method according to any one of claims 1 to 12.

## Patentansprüche

1. Multilink-Kommunikationsverfahren, umfassend:
Erzeugen (S101, S201), durch eine erste Station eines ersten Multilink-Geräts, eines Auslöseanforderungsrahmens, wobei der Auslöseanforderungsrahmen eines oder mehrere von Endzeitangabeinformationen einer Übertragungsmöglichkeit, TXOP, Zugriffskategorieangabeinformationen, AC-Angabeinformationen, und Angabeinformationen zu einer Anzahl an Spatial Streams, NSS-Angabeinformationen, umfasst; wobei das Verfahren durch Folgendes gekennzeichnet wird:
Senden (S102, S202), durch die erste Station des ersten Multilink-Geräts, des Auslöseanforderungsrahmens an einen ersten Zugriffspunkt eines zweiten Multilink-Geräts auf einer ersten Verknüpfung, wobei der Auslöseanforderungsrahmen angibt, dass die TXOP der ersten Station von der ersten Station an den ersten Zugriffspunkt übermittelt wird; und
Empfangen (S105, S206), durch die erste Station des ersten Multilink-Geräts auf der ersten Verknüpfung, eines ersten Auslöserahmens von dem ersten Zugriffspunkt; wobei der erste Auslöserahmen basierend auf den Endzeitangabeinformationen der TXOP, den AC-Angabeinformationen oder den NSS-Angabeinformationen, die in dem Auslöseanforderungsrahmen beinhaltet sind, erzeugt wird, und Empfangen (S105, S206), durch eine zweite Station des ersten Multilink-Geräts auf einer zweiten Verknüpfung, eines zweiten Auslöserahmens von einem zweiten Zugriffspunkt des zweiten Multilink-Geräts, wobei Endzeitpunkte des ersten Auslöserahmens und des zweiten Auslöserahmens gleich sind, und
wobei durch das Empfangen, durch die erste Station des ersten Multilink-Geräts, des ersten Auslöserahmens auf der ersten Verknüpfung und das Empfangen, durch die zweite Station des ersten Multilink-Geräts, des zweiten Auslöserahmens auf der zweiten Verknüpfung das erste Multilink-Gerät durch das zweite Multilink-Gerät dazu geplant wird, Uplink-Daten zu einem gleichen Zeitpunkt auf den zwei Verknüpfungen zu senden.

2. Multilink-Kommunikationsverfahren, umfassend:
Empfangen (S102, S202), durch einen ersten Zugriffspunkt eines zweiten Multilink-Geräts, eines Auslöseanforderungsrahmens von einer ersten Station eines ersten Multilink-Geräts, wobei der Auslöseanforderungsrahmen angibt, dass eine TXOP der ersten Station von der ersten Station an den ersten Zugriffspunkt übermittelt wird, und der Auslöseanforderungsrahmen eines oder mehrere von Endzeitangabeinformationen der Übertragungsmöglichkeit, TXOP, Zugriffskategorieangabeinformationen, AC-Angabeinformationen, und Angabeinformationen zu einer Anzahl an Spatial Streams, NSS-Angabeinformationen, umfasst;
Erzeugen (S103, S204), durch den ersten Zugriffspunkt des zweiten Multilink-Geräts, eines ersten Auslöserahmens basierend auf den Endzeitangabeinformationen der TXOP, den AC-Angabeinformationen oder den NSS-Angabeinformationen, die in dem Auslöseanforderungsrahmen beinhaltet sind; und wobei das Verfahren durch Folgendes gekennzeichnet wird:
Erzeugen (S104, S205), durch einen zweiten Zugriffspunkt des zweiten Multilink-Geräts, eines zweiten Auslöserahmens und Planen durch Senden des ersten Auslöserahmens an die erste Station des ersten Multilink-Geräts auf einer ersten Verknüpfung und Senden des zweiten Auslöserahmens an eine zweite Station des ersten Multilink-Geräts auf einer zweiten Verknüpfung, wobei
Endzeitpunkte des ersten Auslöserahmens und des zweiten Auslöserahmens gleich sind und das zweite Multilink-Gerät durch das Senden des ersten Auslöserahmens an die erste Station des ersten Multilink-Geräts auf der ersten Verknüpfung und das Senden des zweiten Auslöserahmens an die zweite Station des ersten Multilink-Geräts auf der zweiten Verknüpfung das erste Multilink-Gerät dazu plant, Uplink-Daten zu einem gleichen Zeitpunkt auf den beiden Verknüpfungen zu senden.

3. Verfahren nach Anspruch 1 oder 2, wobei die Endzeitangabeinformationen der TXOP eine Angabe einer verbleibenden Dauer umfassen und die verbleibende Dauer kleiner als oder gleich einer äußersten Dauer der TXOP abzüglich einer Sendedauer des Auslöseanforderungsrahmens ist.

4. Verfahren nach einem der Ansprüche 1 bis 3, wobei die AC-Angabeinformationen eine Zugriffskategorie der TXOP angeben, die durch die erste Station über einen Konflikt erlangt wird.

5. Verfahren nach einem der Ansprüche 1 bis 4, wobei die AC-Angabeinformationen ferner dazu verwendet werden, die äußerste Dauer der TXOP zu bestimmen, und eine Gesamtnutzungsdauer der TXOP die äußerste Dauer der TXOP, die der AC entspricht, nicht überschreitet.

6. Verfahren nach einem der Ansprüche 1 bis 5, wobei die NSS-Angabeinformationen eine Anzahl an Spatial Streams angibt, die durch die erste Station zum Senden der Uplink-Daten erfordert wird.

7. Verfahren nach einem der Ansprüche 1 bis 6, wobei der Auslöseanforderungsrahmen ferner Auslöseanforderungsangabeinformationen umfasst und die Auslöseanforderungsangabeinformationen angeben, ob ein Auslöseanforderungsantwortrahmen, der durch den ersten Zugriffspunkt zurückgegeben wird, angibt, zu bestätigen, dass die TXOP von der ersten Station an den ersten Zugriffspunkt übermittelt wird.

8. Verfahren nach einem der Ansprüche 1 und 3 bis 7, wobei das Verfahren ferner Folgendes umfasst:
Empfangen, durch die erste Station des ersten Multilink-Geräts, des Auslöseanforderungsantwortrahmens von dem ersten Zugriffspunkt des zweiten Multilink-Geräts, wobei der Auslöseanforderungsantwortrahmen dem ersten Zugriffspunkt angibt, zu bestätigen, dass die TXOP der ersten Station von der ersten Station an den ersten Zugriffspunkt übermittelt wird.

9. Verfahren nach einem der Ansprüche 2 bis 7, wobei das Verfahren ferner Folgendes umfasst:
Senden, durch den ersten Zugriffspunkt des zweiten Multilink-Geräts, des Auslöseanforderungsantwortrahmens an die erste Station des ersten Multilink-Geräts, wobei der Auslöseanforderungsantwortrahmen dem ersten Zugriffspunkt angibt, zu bestätigen, dass die TXOP der ersten Station von der ersten Station an den ersten Zugriffspunkt übermittelt wird.

10. Verfahren nach Anspruch 8 oder 9, wobei der Auslöseanforderungsantwortrahmen ein Teilfeld einer Protokolldateneinheit einer physikalischen Schicht mit Rückwärtsrichtungsgewähr, RDG-PPDU-Teilfeld, oder ein More-PPDU-Teilfeld umfasst und das RDG-PPDU-Teilfeld oder das More-PPDU-Teilfeld dem ersten Zugriffspunkt angibt, zu bestätigen, dass die TXOP der ersten Station von der ersten Station an den ersten Zugriffspunkt übermittelt wird.

11. Verfahren nach einem der Ansprüche 1 und 3 bis 7, wobei das Verfahren ferner Folgendes umfasst:
Empfangen, durch die erste Station des ersten Multilink-Geräts, eines aggregierten QoS-Nullrahmens von dem ersten Zugriffspunkt des zweiten Multilink-Geräts, wobei ein Wert eines RDG-PPDU-Teilfelds oder eines More-PPDU-Teilfelds, das in dem aggregierten QoS-Nullrahmen enthalten ist, 1 ist und
der aggregierte QoS-Nullrahmen dem ersten Zugriffsrahmen angibt, zu bestätigen, dass die TXOP der ersten Station von der ersten Station an den ersten Zugriffspunkt übermittelt wird.

12. Verfahren nach einem der Ansprüche 2 bis 7, wobei das Verfahren ferner Folgendes umfasst:
Senden, durch den ersten Zugriffspunkt des zweiten Multilink-Geräts, eines aggregierten QoS-Nullrahmens an die erste Station des ersten Multilink-Geräts, wobei ein Wert eines RDG-PPDU-Teilfelds oder eines More-PPDU-Teilfelds, das in dem aggregierten QoS-Nullrahmen enthalten ist, 1 ist und
der aggregierte QoS-Nullrahmen dem ersten Zugriffsrahmen angibt, zu bestätigen, dass die TXOP der ersten Station von der ersten Station an den ersten Zugriffspunkt übermittelt wird.

13. Kommunikationsvorrichtung (1000), umfassend einen Prozessor (1001, 1005) und einen Speicher (1002), wobei der Speicher (1002) dazu konfiguriert ist, Anweisungen zu speichern; und, wenn der Prozessor (1001, 1005) die Anweisungen ausführt, es der Kommunikationsvorrichtung (1000) ermöglicht wird, das Verfahren nach einem der Ansprüche 1 bis 12 durchzuführen.

14. Chip oder Chipsystem, umfassend eine Eingabe-/Ausgabeschnittstelle und einen Verarbeitungsschaltkreis, wobei die Eingabe-/Ausgabeschnittstelle dazu konfiguriert ist, Informationen oder Daten auszutauschen, und der Verarbeitungsschaltkreis dazu konfiguriert ist, Anweisungen auszuführen, um es einer Vorrichtung, die mit dem Chip oder dem Chipsystem ausgerüstet ist, zu ermöglichen, das Verfahren nach einem der Ansprüche 1 bis 12 durchzuführen.

15. Computerlesbares Speichermedium, wobei das computerlesbare Speichermedium Programmanweisungen speichert; und, wenn die Programmanweisungen auf einem Prozessor ausgeführt werden, es einer Kommunikationsvorrichtung, umfassend den Prozessor, ermöglicht wird, das Verfahren nach einem der Ansprüche 1 bis 12 durchzuführen.

## Revendications

1. Procédé de communication à liaisons multiples, comprenant :
la génération (S101, S201), par une première station d'un premier dispositif à liaisons multiples, d'une trame de demande de déclenchement, dans lequel la trame de demande de déclenchement comprend une ou plusieurs informations parmi les suivantes : informations d'indication d'heure de fin d'une opportunité de transmission (TXOP), informations d'indication de catégorie d'accès (AC) et informations d'indication de nombre de flux spatiaux (NSS) ; le procédé étant **caractérisé par** :
l'envoi (S102, S202), par la première station du premier dispositif à liaisons multiples, de la trame de demande de déclenchement à un premier point d'accès d'un second dispositif à liaisons multiples sur une première liaison, dans lequel la trame de demande de déclenchement indique que la TXOP de la première station est transférée de la première station au premier point d'accès ; et
la réception (S105, S206), par la première station du premier dispositif à liaisons multiples sur la première liaison, d'une première trame de déclenchement du premier point d'accès ; dans lequel la première trame de déclenchement est générée sur la base des informations d'indication d'heure de fin de la TXOP, des informations d'indication AC ou des informations d'indication NSS incluses dans la trame de demande de déclenchement, et la réception (S105, S206), par une seconde station du premier dispositif à liaisons multiples sur une seconde liaison, d'une seconde trame de déclenchement d'un second point d'accès du second dispositif à liaisons multiples, dans lequel les instants de fin de la première trame de déclenchement et de la seconde trame de déclenchement sont identiques, et
dans lequel en recevant, par la première station du premier dispositif à liaisons multiples, la première trame de déclenchement sur la première liaison, et en recevant, par la seconde station du premier dispositif à liaisons multiples, la seconde trame de déclenchement sur la seconde liaison, le premier dispositif à liaisons multiples est programmé, par le second dispositif à liaisons multiples, pour envoyer des données de liaison montante sur les deux liaisons au même moment.

2. Procédé de communication à liaisons multiples, comprenant :
la réception (S102, S202), par un premier point d'accès d'un second dispositif à liaisons multiples, d'une trame de demande de déclenchement d'une première station d'un premier dispositif à liaisons multiples, dans lequel la trame de demande de déclenchement indique qu'une TXOP de la première station est transférée de la première station au premier point d'accès, et la trame de demande de déclenchement comprend une ou plusieurs informations parmi les suivantes : informations d'indication de temps de fin de l'opportunité de transmission, TXOP, informations d'indication de catégorie d'accès, AC, et informations d'indication de nombre de flux spatiaux, NSS ;
la génération (S103, S204), par le premier point d'accès du second dispositif à liaisons multiples, d'une première trame de déclenchement sur la base des informations d'indication d'heure de fin du TXOP, les informations d'indication AC, ou les informations d'indication NSS incluses dans la trame de demande de déclenchement ; et le procédé étant **caractérisé par** :
la génération (S104, S205), par un second point d'accès du second dispositif à liaisons multiples, d'une seconde trame de déclenchement, et la planification, par l'envoi de la première trame de déclenchement à la première station du premier dispositif à liaisons multiples sur une première liaison et l'envoi de la seconde trame de déclenchement à une seconde station du premier dispositif à liaisons multiples sur une seconde liaison, dans lequel
les moments de fin de la première trame de déclenchement et de la seconde trame de déclenchement sont les mêmes, et en envoyant la première trame de déclenchement à la première station du premier dispositif à liaisons multiples sur la première liaison et en envoyant la seconde trame de déclenchement à la seconde station du premier dispositif à liaisons multiples sur la seconde liaison, le second dispositif à liaisons multiples planifie le premier dispositif à liaisons multiples pour envoyer des données de liaison montante sur les deux liaisons au même moment.

3. Procédé selon la revendication 1 ou 2, dans lequel les informations d'indication de temps de fin de la TXOP comprennent une indication de la durée restante, et la durée restante est inférieure ou égale à la durée extrême de la TXOP moins la durée d'envoi de la trame de demande de déclenchement.

4. Procédé selon l'une quelconque des revendications 1 à 3, dans lequel les informations d'indication AC indiquent une catégorie d'accès de la TXOP qui est obtenue par contention par la première station.

5. Procédé selon l'une quelconque des revendications 1 à 4, dans lequel les informations d'indication AC sont également utilisées pour déterminer la durée extrême de la TXOP, et la durée d'utilisation totale de la TXOP ne dépasse pas la durée extrême de la TXOP correspondant à l'AC.

6. Procédé selon l'une quelconque des revendications 1 à 5, dans lequel les informations d'indication NSS indiquent un nombre de flux spatiaux requis par la première station pour envoyer les données de liaison montante.

7. Procédé selon l'une quelconque des revendications 1 à 6, dans lequel la trame de demande de déclenchement comprend également des informations d'indication de demande de déclenchement, et les informations d'indication de demande de déclenchement indiquent si une trame de réponse de demande de déclenchement renvoyée par le premier point d'accès indique de confirmer que la TXOP est transférée de la première station au premier point d'accès.

8. Procédé selon l'une quelconque des revendications 1 et 3 à 7, dans lequel le procédé comprend également :
la réception, par la première station du premier dispositif à liaisons multiples, de la trame de réponse de demande de déclenchement du premier point d'accès du second dispositif à liaisons multiples, dans lequel la trame de réponse de demande de déclenchement indique au premier point d'accès de confirmer que la TXOP de la première station est transférée de la première station au premier point d'accès.

9. Procédé selon l'une quelconque de la revendication 2 à 7, dans lequel le procédé comprend également :
l'envoi, par le premier point d'accès du second dispositif à liaisons multiples, de la trame de réponse de demande de déclenchement à la première station du premier dispositif à liaisons multiples, dans lequel la trame de réponse de demande de déclenchement indique au premier point d'accès de confirmer que la TXOP de la première station est transférée de la première station au premier point d'accès.

10. Procédé selon la revendication 8 ou 9, dans lequel la trame de réponse de demande de déclenchement comprend un sous-champ d'autorisation en sens inverse, RDG, d'unité de données de protocole de couche physique, PPDU, ou un sous-champ PPDU supplémentaire, et le sous-champ PPDU RDG ou le sous-champ PPDU supplémentaire indique le premier point d'accès pour confirmer que la TXOP de la première station est transférée de la première station au premier point d'accès.

11. Procédé selon l'une quelconque des revendications 1 et 3 à 7, dans lequel le procédé comprend également :
la réception, par la première station du premier dispositif à liaisons multiples, d'une trame nulle QoS agrégée du premier point d'accès du second dispositif à liaisons multiples, dans lequel une valeur d'un sous-champ PPDU RDG ou d'un sous-champ PPDU supplémentaire transporté dans la trame nulle QoS agrégée est 1, et
la trame nulle QoS agrégée indique le premier point d'accès pour confirmer que la TXOP de la première station est transférée de la première station au premier point d'accès.

12. Procédé selon l'une quelconque des revendications 2 à 7, dans lequel le procédé comprend également :
l'envoi, par le premier point d'accès du second dispositif à liaisons multiples, d'une trame nulle QoS agrégée à la première station du premier dispositif à liaisons multiples, dans lequel une valeur d'un sous-champ PPDU RDG ou d'un sous-champ PPDU supplémentaire transporté dans la trame nulle QoS agrégée est 1, et
la trame nulle QoS agrégée indique le premier point d'accès pour confirmer que la TXOP de la première station est transférée de la première station au premier point d'accès.

13. Appareil de communication (1000), comprenant un processeur (1001, 1005) et une mémoire (1002), dans lequel la mémoire (1002) est configurée pour stocker des instructions ; et lorsque le processeur (1001, 1005) exécute les instructions, l'appareil de communication (1000) est activé pour réaliser le procédé selon l'une quelconque des revendications 1 à 12.

14. Puce ou système de puce, comprenant une interface d'entrée/sortie et un circuit de traitement, dans lequel l'interface d'entrée/sortie est configurée pour échanger des informations ou des données, et le circuit de traitement est configuré pour exécuter des instructions, pour activer un appareil équipé de la puce ou du système de puce pour qu'il réalise le procédé selon l'une quelconque des revendications 1 **à 12.**

15. Support de stockage lisible par ordinateur, dans lequel le support de stockage lisible par ordinateur stocke des instructions de programme ; et lorsque les instructions de programme sont exécutées sur un processeur, un appareil de communication comprenant un processeur est activé pour réaliser le procédé selon l'une quelconque des revendications 1 à 12.
